(19) Europäisches Patentamt / European Patent Office / Office européen des brevets

(11) **EP 4 726 621 A1**

(12) **EUROPEAN PATENT APPLICATION**

(43) Date of publication:
**15.04.2026 Bulletin 2026/16**

(21) Application number: **25207984.3**

(22) Date of filing: **10.10.2025**

(51) International Patent Classification (IPC):
**G06Q 10/0635** (2023.01)   **G06Q 10/0637** (2023.01)

(52) Cooperative Patent Classification (CPC):
**G06Q 10/0635; G06Q 10/0637**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.10.2024 IN 202441077090**

(71) Applicant: **ABB SCHWEIZ AG**
**5400 Baden (CH)**

(72) Inventors:
• **SEETHARAMA, Vaishnavi**
**560066 Bengaluru (IN)**
• **TATHE, Ajinkya**
**560037 Bangalore (IN)**
• **JADHAV, Jeevan**
**560103 Bangalore (IN)**
• **CHATTERJEE, Anindya**
**560048 Bengaluru (IN)**
• **JONES, Stacey**
**Lake Jackson, 77566 (US)**

(74) Representative: **Zimmermann & Partner**
**Patentanwälte mbB**
**P.O. Box 330 920**
**80069 München (DE)**

(54) **METHOD AND COMPUTING SYSTEM FOR ASSESSING DYNAMIC RISK FOR STRATEGIC PLANNING OF ASSETS AND SYSTEMS**

(57)    The present disclosure relates to field of Failure Mode, Effect and Criticality Analysis (FMECA) that discloses method and computing system for assessing dynamic risk for strategic planning of assets. The computing system receives risk score of failure modes of assets and event data related to assets. Further, computing system determines asset level first score indicating aggregated criticality of assets based on risk score of failure modes of assets. Thereafter, computing system determines asset level second score indicating aggregated dynamic criticality of assets based on asset level amplified risk score of failure modes of assets. Furthermore, computing system determines asset level second score indicating aggregated dynamic criticality of assets. Thereafter, computing system assess dynamic risk of assets based on asset level first score and asset level second score. Finally, computing system provides corrective action recommendations related to assets. Present disclosure provides advantage of enhancing reliability, safety, and efficiency of assets.

FIG. 1A

EP 4 726 621 A1

**Description**

**TECHNICAL FIELD**

The present disclosure relates to Failure Mode, Effect and Criticality Analysis (FMECA). Particularly, the present disclosure relates to a method and computing system for assessing dynamic risk for strategic planning of assets and systems.

**BACKGROUND**

Criticality Analysis is a vital process in various industries, ranging from refineries to healthcare and manufacturing. Its significance lies in its ability to systematically assess and prioritize potential failure modes within complex systems, ensuring the safety, reliability, and efficiency of these systems. Criticality analysis helps organizations identify not only what could go wrong but also the consequences of those failures on both operational performance and safety. By meticulously analyzing failure modes and their criticality, criticality analysis empowers decision-makers to allocate resources efficiently for preventive measures, maintenance, and risk mitigation strategies. This proactive approach not only enhances product and system reliability but also minimizes downtime, reduces costly breakdowns, and, most importantly, safeguards human lives. In essence, criticality analysis is a cornerstone of risk management, providing a structured framework to optimize system performance while prioritizing safety, ultimately leading to improved product quality and customer satisfaction.

Failure Mode, Effect and Criticality Analysis (FMECA) is a systematic approach for proactively assessing the risks associated with an asset. It involves identifying potential failure modes within a system, analyzing their effects on critical functions and overall safety, and prioritizing them based on their likelihood and severity. By understanding these risks, FMECA enables informed decision-making regarding maintenance, design modifications, and operational procedures to mitigate potential issues and ensure the asset's reliability. Therefore, there is a need to provide dynamic FMECA for daily maintenance, planning and execution of complex systems.

The information disclosed in this background of the disclosure section is only for enhancement of understanding of the general background of the invention and should not be taken as an acknowledgement or any form of suggestion that this information forms the prior art already known to a person skilled in the art.

**SUMMARY**

Disclosed herein is a method of assessing dynamic risk for strategic planning of one or more assets. The method comprises receiving, by a processor associated with a computing system, a risk score of each of one or more failure modes of each of one or more assets and event data related to each of the one or more assets from at least one input source associated with each of the one or more assets. Further, the method comprises determining an asset level first score indicating aggregated criticality of each of the one or more assets based on the risk score of each of the one or more failure modes of each of the one or more assets. Thereafter, the method comprises determining an asset level amplified risk score of each of the one or more failure modes based on the risk score of each of the one or more failure modes of each of the one or more assets and the event data related to each of the one or more assets. Furthermore, the method comprises determining an asset level second score indicating aggregated dynamic criticality of each of the one or more assets based on the asset level amplified risk score of each of the one or more failure modes of each of the one or more assets. Thereafter, the method comprises assessing dynamic risk of each of the one or more assets based on the asset level first score and the asset level second score. Finally, the method comprises one or more corrective action recommendations related to the one or more assets based on the assessment.

Further, disclosed herein is a computing system for assessing dynamic risk for strategic planning of one or more assets. The computing system comprises a processor and a memory. The memory is communicatively coupled to the processor and stores processor-executable instructions, which on execution, cause the processor to receive a risk score of each of one or more failure modes of each of one or more assets and event data related to each of the one or more assets from at least one input source associated with each of the one or more assets. Further, the processor determines an asset level first score indicating aggregated criticality of each of the one or more assets based on the risk score of each of the one or more failure modes of each of the one or more assets. Thereafter, the processor determines an asset level amplified risk score of each of the one or more failure modes based on the risk score of each of the one or more failure modes of each of the one or more assets and the event data related to each of the one or more assets. Furthermore, the processor determines an asset level second score indicating aggregated dynamic criticality of each of the one or more assets based on the asset level amplified risk score of each of the one or more failure modes of each of the one or more assets. Thereafter, the processor assess dynamic risk of each of the one or more assets based on the asset level first score and the asset level second score. Finally, the processor provides one or more corrective action recommendations related to the one or more assets based on the assessment.

Disclosed herein is a method of assessing dynamic risk for strategic planning of a system associated with one or more assets. The method comprises receiving, by a processor associated with a computing system, at least one of a risk score of each of one or more failure modes of each of one or more assets associated with each of the one or more systems, a risk score of each of one or more failure modes of each of one or more systems, asset level first score indicating criticality of each of the one or more failure modes of each of the one or more assets, asset level second score indicating dynamic criticality of each of the one or more assets, event data related to the each of the one or more systems and event data related to the each of the one or more assets, from at least one input source associated with the system. Further, the method comprises determining a system level first score indicating aggregated criticality of each of the one or more systems based on at least one of, the risk score of each of the one or more failure modes of each of the one or more systems, and one of the risk score of each of the one or more failure modes of each of the one or more assets and the asset level first score. Thereafter, the method comprises determining a system level amplified risk score of each of the one or more failure modes based on the risk score of each of the one or more failure modes of each of the one or more systems and the event data related to each of the one or more systems. Furthermore, the method comprises determining a system level second score indicating aggregated dynamic criticality of each of the one or more systems based on at least one of, the system level amplified risk score of each of the one or more failure modes of each of the one or more systems, and one of an asset level amplified risk score of each of the one or more failure modes of each of the one or more assets or the asset level second score. The asset level amplified risk score is determined based on the risk score of each of the one or more failure modes of each of the one or more assets and the event data related to each of the one or more assets. Thereafter, the method comprises assessing dynamic risk of each of the one or more systems based on the system level first score and the system level second score. Finally, the method comprises providing one or more corrective action recommendations related to the one or more systems based on the assessment.

Further, disclosed herein is a computing system for dynamic risk of a system associated with one or more assets for strategic planning. The computing system comprises a processor and a memory. The memory is communicatively coupled to the processor and stores processor-executable instructions, which on execution, cause the processor to receive at least one of a risk score of each of one or more failure modes of each of one or more assets associated with each of the one or more systems, a risk score of each of one or more failure modes of each of one or more systems, asset level first score indicating criticality of each of the one or more failure modes of each of the one or more assets, asset level second score indicating dynamic criticality of each of the one or more assets, event data related to the each of the one or more systems and event data related to the each of the one or more assets, from at least one input source associated with the system. Further, the processor determines a system level first score indicating aggregated criticality of each of the one or more systems based on at least one of, the risk score of each of the one or more failure modes of each of the one or more systems, and one of the risk score of each of the one or more failure modes of each of the one or more assets and the asset level first score. Thereafter, the processor determines a system level amplified risk score of each of the one or more failure modes based on the risk score of each of the one or more failure modes of each of the one or more systems and the event data related to each of the one or more systems. Furthermore, the processor determines a system level second score indicating aggregated dynamic criticality of each of the one or more systems based on at least one of, the system level amplified risk score of each of the one or more failure modes of each of the one or more systems, and one of an asset level amplified risk score of each of the one or more failure modes of each of the one or more assets or the asset level second score. The asset level amplified risk score is determined based on the risk score of each of the one or more failure modes of each of the one or more assets and the event data related to each of the one or more assets. Thereafter, the processor assess dynamic risk of each of the one or more systems based on the system level first score and the system level second score. Finally, the processor provides one or more corrective action recommendations related to the one or more systems based on the assessment.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE ACCOMPANYING DRAWINGS

The accompanying drawings, which are incorporated in and constitute a part of this disclosure, illustrate exemplary embodiments and, together with the description, explain the disclosed principles. In the figures, the left-most digit(s) of a reference number identifies the figure in which the reference number first appears. The same numbers are used throughout the figures to reference like features and components. Some embodiments of the system and/or methods in accordance with embodiments of the present subject matter are now described, by way of example only, and regarding the accompanying figures, in which:

**FIG. 1A** shows an exemplary architecture for assessing dynamic risk for strategic planning of one or more assets, in accordance with some embodiments of the present disclosure;

**FIG. 1B** shows an exemplary graph indicating criticality of multiple assets, in accordance with some embodiments of the present disclosure; assessing dynamic risk for strategic planning of one or more assets

**FIG. 2A** and **2B** shows an exemplary architecture for assessing dynamic risk for strategic planning of a system associated with one or more assets, in accordance with some embodiments of the present disclosure;

**FIG. 2C** shows an exemplary fluid power system, in accordance with some embodiments of the present disclosure; assessing dynamic risk for strategic planning of a system associated with one or more assets

**FIG. 3** shows a detailed block diagram of a computing system for assessing dynamic risk for strategic planning of one or more assets, in accordance with some embodiments of the present disclosure;

**FIG. 4** shows a detailed block diagram of a computing system for assessing dynamic risk for strategic planning of a system associated with one or more assets, in accordance with some embodiments of the present disclosure;

**FIG. 5** shows a flowchart illustrating a method of assessing dynamic risk for strategic planning of one or more assets, in accordance with some embodiments of the present disclosure;

**FIG. 6** shows a flowchart illustrating a method of assessing dynamic risk for strategic planning of a system associated with one or more assets, in accordance with some embodiments of the present disclosure; and

**FIG. 7** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether such computer or processor is explicitly shown.

## DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the specific forms disclosed, but on the contrary, the disclosure is to cover all modifications, equivalents, and alternative falling within the scope of the disclosure.

The terms "comprises", "comprising", "includes", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

As outlined in the background section, the model-based approach which is an existing technique provides diagnostic alerts and symptoms are not consolidated due to its nature of reporting deviations which apparently may be seen as small/insignificant deviations. Also, the existing FMECA is static in nature, which may not be so fruitful in daily maintenance, planning and execution. Further, in most of existing implementation of predictive maintenance, the existing system lacks task prioritization method to tackle multiple events generated from predictive maintenance applications. However, depending on the criticality of that affected failure mode and inherent risk perception will provide an opportunity to normalize the risk estimates and utilize it for regular strategic planning of failure avoidance. The present disclosure proposes to make Failure Mode, Effect and Criticality Analysis (FMECA) dynamic considering all the abnormalities and cumulative effect on differential risk estimate will bring value for them to improve their maintenance planning function. The existing A Performance Monitoring (APM) system is used to improve maintenance planning function. The present disclosure proposes dynamic FMECA that utilizes event data such as alerts and warning notification data from APM system represents a significant advancement in risk assessment and system reliability. By incorporating real-time event data, the present disclosure enables organizations to continuously monitor and adapt to evolving conditions, ensuring the utmost safety and efficiency of complex systems. The importance of dynamic FMECA lies in its ability to detect and highlight the change in the inherited risks due to abnormalities, degradation of health or performance of the assets and systems. This will enable dynamic prioritization of any mitigative activities due consideration weightage to the scale of criticality of the machine and deviation quantum. The present disclosure not only minimizes downtime and costly disruptions but also enhances predictive maintenance strategies, scheduling resource allocation and reducing overall operational costs. Moreover, dynamic FMECA empowers industries such as, without limiting to, process industries, manufacturing, and healthcare to proactively address emerging issues, prevent unplanned stoppages, and ultimately deliver a higher level of reliability and performance of the assets and the systems. In a world increasingly reliant on data-driven decision-making, dynamic FMECA which assist in analyzing the changing criticality of vital assets is a crucial tool for ensuring the continued safety and functionality of complex systems.

According to the present disclosure, a computing system which may be configured to perform dynamic FMECA, may receive a risk score of each of one or more failure modes of each of one or more assets and event data related to each of the one or more assets from at least one input source associated with each of the one or more assets. As discussed above, APM system may provide the event data which may include, without limitation, real-time and/or near real-time event data. Further, the computing system may determine an asset level first score indicating aggregated criticality of each of the one or more assets based on the risk score of each of the one or more failure modes of each of the one or more assets. Upon determining the asset level first score, the computing system may determine an asset level amplified risk score of each of the one or more failure modes based on the risk score of each of the one or more failure modes of each of the one or more assets and the event data related to each of the one or more assets. The asset level amplified risk score provides a real-time understanding of condition of each of the one or more failure modes. Thereafter, the computing system may determine an asset level second score indicating aggregated dynamic criticality of each of the one or more assets based on the asset level amplified risk score of each of the one or more failure modes of each of the one or more assets. Furthermore, the computing system may assess dynamic risk of each of the one or more assets based on the asset level first score and the asset level second score. Finally, the computing system may provide one or more corrective action recommendations related to the one or more assets based on the assessment. The strategic planning may be a systematic approach to identifying, analyzing, and prioritizing potential failure modes in the assets and the systems. The strategic planning is a proactive measure designed to prevent failures and minimize their impact on operations of the assets and the systems. The present disclosure also evaluates dynamic risk of a system associated with one or more assets for strategic planning, which is discussed below in detail.

The present disclosure assess dynamic risk of assets and systems based on real-time and/or near-real time event data which helps in accurately performing the risk assessment of the assets and the systems. The present disclosure helps in preventing unexpected equipment failures by proactively identifying change in the criticality of failure modes and taking preventive maintenance actions as the event data is used to determine the asset level second score. Further, the present disclosure performs risk assessment of the one or more assets and the one or more systems considering safety and environmental impact of the one or more assets and the one or more systems. The present disclosure helps in improving the safety by detecting safety-critical failures in advance and taking necessary precautions. Further, the present disclosure helps in proactively identifying the change in the criticality of the failure mode and taking necessary actions to mitigate the failure modes which helps in reducing resources and additional cost caused by critical failure modes. In other words, the probable wastage resource and costs which may be incurred if the machine is unfocused is reduced as the present disclosure assess dynamic risk. Efficiently using dynamic FMECA and proactively addressing the criticality will address the environmental impacts that may occur if the failures are met by the assets. The present disclosure may help in extending the lifespan of heavy machinery by using dynamic FMECA.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

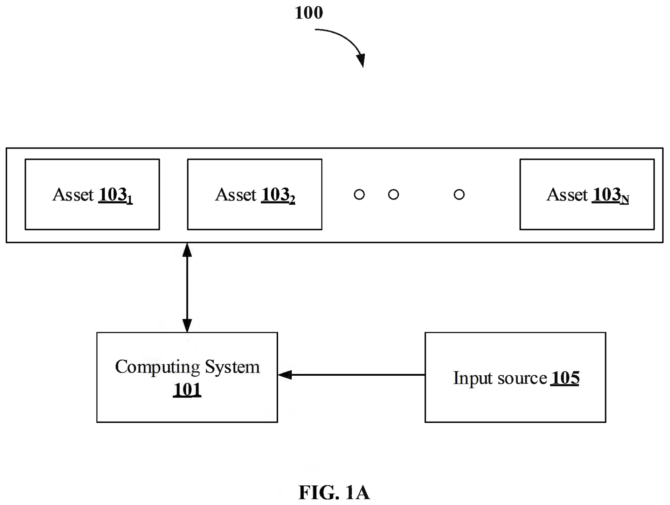

**FIG. 1A** shows an exemplary architecture for assessing dynamic risk for strategic planning of one or more assets, in accordance with some embodiments of the present disclosure.

Exemplary environment **100** comprises a computing system **101** and asset **103₁** to asset **103_N** (also referred as one or more assets **103** or assets **103**). In an embodiment, the computing system may be associated with the one or more assets **103** using a communication network (not shown in figure). As an example, the communication network may be a wired communication network, a wireless communication network or a combination of both the wired communication network and the wireless communication network, which enables the connection of the one or more assets **103** and the computing system **101** for communication. As an example, the computing system **101** may include, without limitation, any device such as, but not limited to, mobile phones, smartphones, laptops, cloud computing, and Personal Computers (PCs). In some embodiments, the computing system **101** may be an existing computing system which was used for performing Failure Mode Effect and Criticality Analysis (FMECA) of the one or more assets **103** using conventional technique. In some embodiments, the computing system **101** may be an upgraded version of the existing computing system. As an example, the one or more assets **103** may include, without limitation, any electronic system or any mechanical system used in an industry. As an example, the one or more assets **103** in a wind turbine system may include, without limitation, compressor, combustor turbine, generators and transformers. In an embodiment, the one or more assets **103** and the computing system **101** may be associated with an Asset Performance Monitoring (APM) system (not shown in figure) which may be used to track the performance of the one or more assets **103.**

In an embodiment, the computing system **101** may be configured to receive a risk score of each of one or more failure modes of each of the one or more assets **103** and event data related to each of the one or more assets **103** from at least one input source **105** associated with each of the one or more assets **103.** In an embodiment, the one or more failure modes may include a specific way in which the asset may fail to perform its intended function which may include, without limitation, primary function and secondary function. For example, malfunctioning of the asset, performance issue of the asset, degradation of the asset and the like, which may prevent the asset to perform its intended function. As an example, if the asset is a compressor, the one or more failure modes may include, without limitation, thrust bearing failure, Non-Drive End (NDE), Dry Gas Seal (DGS) failure, Drive End (DE) bearing failure and DE DGS failure. In an embodiment, each of one or more failure modes may be assigned with the risk score which may be determined based on severity of the failure mode, occurrence of the failure mode and detection of the failure mode. In some embodiments, the risk score may be determined using the below Equation 1:

$$Risk\ Score = \frac{Severity \times Occurance}{\sqrt{Detection}} \quad \text{------- } \textbf{Equation 1}$$

The Equation 1 provided above is intended as an illustrative example and should not be construed as a limitation of the present disclosure.

In an embodiment, the severity of the failure mode, the occurrence of the failure mode and the detection of the failure mode may be determined periodically. As an example, the values may be determined by a Subject Matter Expert (SME), a back-end computing system and the like. Considering the above example of the compressor, the severity of the failure mode, the occurrence of the failure mode, the detection of the failure mode and the risk score of each failure mode of the compressor are shown below:

**Table A**

| Failure mode | Severity | Occurrence | Detection | Risk score |
|---|---|---|---|---|
| FM1 | 120 | 200 | 500 | 1073 |
| FM2 | 130 | 220 | 520 | 1254 |
| FM3 | 180 | 250 | 550 | 1919 |
| FM4 | 190 | 280 | 550 | 2268 |

The values provided in the above table "Table A" is intended as an illustrative example and should not be construed as a limitation of the present disclosure. The risk score in Table A above is determined using the equation discussed above. In some embodiments, the risk score may be determined using any other well-known techniques.

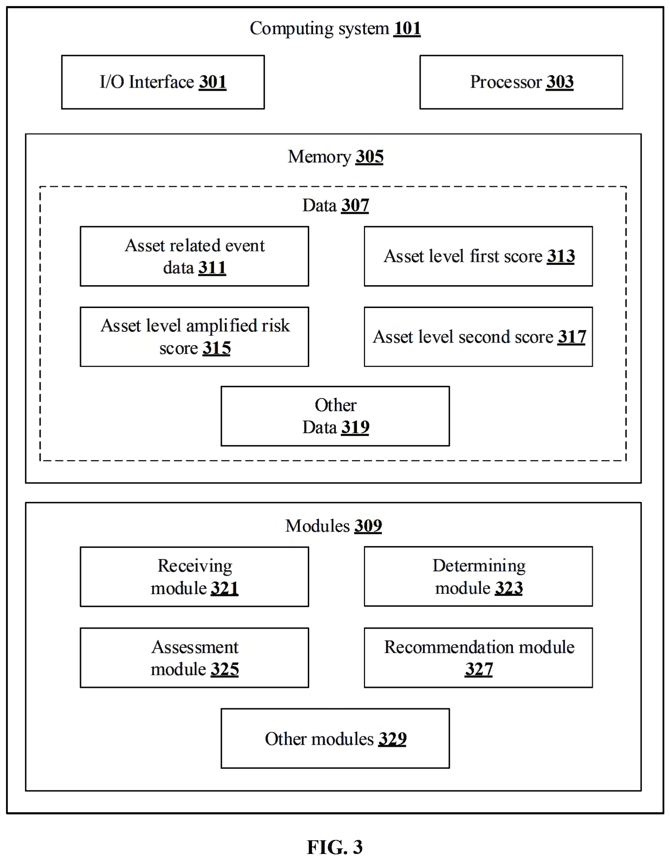

In an embodiment, the event data may be generated based on at least one of analytics information related to the one or more assets **103** received from analytics data sources, alerts and warnings related to the one or more assets **103** received from control systems, and notifications related to the one or more assets **103** received from Enterprise Resource Planning (ERP) systems. In an embodiment, the even data may indicate at least one of a plurality of characteristics associated with each of one or more events related to corresponding one or more assets **103.** In an embodiment, the event data may be received from the APM system associated with the computing system **101** and the one or more assets **103.** The event data is discussed in detail in **FIG. 3** of the present disclosure. The at least one input source **105** associated with each of the one or more assets **103** may include, without limitation, the APM system for receiving the event data and computing system **101** to receive the risk score of each of the failure modes of each of the one or more assets **103.**

In an embodiment, upon receiving the risk score and the event data, the computing system **101** may be configured to determine an asset level first score indicating aggregated criticality of each of the one or more assets **103** based on the risk score of each of the one or more failure modes of each of the one or more assets **103.** In an embodiment, the computing system **101** may normalize the risk score of each of the one or more failure modes of each of the one or more assets **103.** Normalization is performed to standardize the risk score of each of the one or more failure modes of each of the one or more assets **103.** In an embodiment, the normalization is performed by dividing maximum risk score with each of the risk score. Considering the risk score values from Table A, the normalized values of the risk score are provided below:

**Table B**

| Failure mode | Risk score | Normalized value |
|---|---|---|
| FM1 | 1073 | 0.0 |
| FM2 | 1254 | 0.2 |
| FM3 | 1919 | 1.0 |
| FM4 | 2268 | 1.4 |

The values provided in the above table "Table B" is intended as an illustrative example and should not be construed as a limitation of the present disclosure.

In an embodiment, upon normalizing the risk score, the computing system **101** may determine a weightage for the normalized risk score of each of the one or more failure modes of each of the one or more assets **103** using a first predefined technique. As an example, the first predefined technique may be a polynomial equation in which the normalized value is used to determine the weightage. As an example, the weightage may be determined using the below polynomial equation i.e., Equation 2:

$$Weightage = A1x^3 + A2x^2 + A3x + A4 \text{------- \textbf{Equation 2}}$$

Where:

A1, A2, A3 and A4 may be predefined constant values which may be derived from an experimentation process. As an example, the range of 'a' may be -5 to -3, 'A2' may be -3 to 5, 'A3' may be -5 to 2 and 'A4' may be -5 to -5.

The Equation 2 provided above is intended as an illustrative example and should not be construed as a limitation of the present disclosure. Considering the normalized value in **Table B,** the weightage value determined for each of the one or more failure modes of the compressor are provided below:

**Table C**

| Failure mode | Normalized value | Weightage |
|---|---|---|
| FM1 | 0.0 | 0.00 |
| FM2 | 0.2 | 0.12 |
| FM3 | 1.0 | 0.50 |
| FM4 | 1.4 | 0.29 |

The values provided in the above table "Table C" is intended as an illustrative example and should not be construed as a limitation of the present disclosure.

In an embodiment, upon determining the weightage, the computing system **101** may determine the asset level first score based on the risk score of the one or more failure modes and cumulative weightage score of the each of the one or more failure modes of each of the one or more assets **103.** The cumulative weightage score may be obtained by aggregating weightage of the each of the one or more failure modes of each of the one or more assets **103.**

In an embodiment, upon determining the asset level first score, the computing system **101** may be configured to determine an asset level amplified risk score of each of the one or more failure modes based on the risk score of each of the one or more failure modes of each of the one or more assets **103** and the event data related to each of the one or more assets **103.** In an embodiment, the computing system **101** may determine at least one weightage value for each of the one or more assets **103** based on the event data and a plurality of characteristics associated with each of one or more events related to the corresponding one or more assets **103.** The plurality of characteristics may include, without limitation, type of event, type of notification, time at which the notification was generated, open events which are not resolved, and number of notifications generated for each event. The type of event may include, without limitation, rule based, condition indicator, and unsupervised event. The type of notification may include, without limitation, an alert and a warning. Further, the computing system **101** may determine an amplification factor for each of the one or more failure modes of each of the one or more assets **103** based on the at least one weightage value using a second predefined technique. The method of determining the at least one weightage value and the amplification factor is discussed in **FIG. 3** of the present disclosure. The second predefined technique may be an equation in which the at least one weightage value is used to determine the amplification factor. As an example, the amplification factor may be determined using below Equation 3:

Amplification factor (AF):

$$AF = 1 + a * (f(w1, w2, b)) - c \text{------- } \textbf{Equation 3}$$

As an example, the equation for determining the amplification factor derived from above equation is provided below:

$$AF = 1 + a * \frac{1}{1 + b * e^{(w1 * w2)}} - c$$

Where:

w1 is first weight which may be determined based on the type of the event. As an example, the event type 1 is more severe than the event type 2, event type 3, event type 4 and event type 6.
w2 is second weight which may be determined based on time of notification.
a, b and c are predefined constant values which may be derived from an experimentation process. As an example, the range of 'a' may be 0-20, 'b' may be 0-5 and 'c' may be - 2-5.

The Equation 3 provided above is intended as an illustrative example and should not be construed as a limitation of the present disclosure. Thereafter, the computing system **101** may determine the asset level amplified risk score of each of the one or more failure modes of each asset in the one or more assets **103** based on the risk score of each of the one or more failure modes of each of the one or more assets **103** and the corresponding amplification factor. The amplification factor may be multiplied with the risk score of each of the one or more failure modes to obtain the asset level amplified risk score of each of the one or more failure modes. Considering the risk score values in the Table A, the amplification factor, the amplified risk score for the corresponding one or more failure modes are shown in Table D below:

**Table D**

| Failure mode | Risk score | Amplification factor | Amplified risk score |
|---|---|---|---|
| FM1 | 1073 | 1.50 | 1610 |
| FM2 | 1254 | 1.50 | 1881 |
| FM3 | 1919 | 1.25 | 2399 |
| FM4 | 2268 | 1.00 | 2268 |

The values provided in the above table "Table D" is intended as an illustrative example and should not be construed as a limitation of the present disclosure.
In an embodiment, upon determining the asset level amplified risk score, the computing system **101** may be configured to determine an asset level second score indicating aggregated dynamic criticality of each of the one or more assets **103** based on the asset level amplified risk score of each of the one or more failure modes of each of the one or more assets **103.** In an embodiment, the computing system **101** may normalize the asset level amplified risk score of each of the one or more failure modes. Normalization is performed to standardize the amplified risk score of each of the one or more failure modes of each of the one or more assets **103.** In an embodiment, the normalization is performed by dividing maximum amplified risk score with each of the amplified risk score. Considering the risk score values from **Table D,** the normalized values of the risk score is provided below:

**Table E**

| Failure mode | Amplified risk score | Normalized value |
|---|---|---|
| FM1 | 1610 | 0.0 |

(continued)

| Failure mode | Amplified risk score | Normalized value |
|---|---|---|
| FM2 | 1881 | 0.3 |
| FM3 | 2399 | 1.0 |
| FM4 | 2268 | 0.8 |

The values provided in the above table "Table E" is intended as an illustrative example and should not be construed as a limitation of the present disclosure.

In an embodiment, upon normalizing the amplified risk score, the computing system **101** may determine a weightage for the normalized asset level amplified risk score of each of the one or more failure modes of each of the one or more assets **103** using a first predefined technique. As an example, the first predefined technique may be the polynomial equation (Equation 2) in which the normalized value is used to determine the weightage. Considering the normalized value in Table E, the weightage value determined for each of the one or more failure modes of the compressor are provided below:

**Table F**

| Failure mode | Normalized value | Weightage |
|---|---|---|
| FM1 | 0.0 | 0.00 |
| FM2 | 0.3 | 0.21 |
| FM3 | 1.0 | 0.50 |
| FM4 | 0.8 | 0.48 |

The values provided in the above table "Table F" is intended as an illustrative example and should not be construed as a limitation of the present disclosure.

In an embodiment, upon determining the weightage, the computing system **101** may determine the asset level second score based on the risk score of the one or more failure modes and cumulative weightage score of the each of the one or more failure modes of each of the one or more assets **103.** The cumulative weightage score is obtained by aggregating weightage of the each of the one or more failure modes of each of the one or more assets **103.** Considering the weightage in Table F, the cumulative weightage score may be determined based on sum of the weightage with a predefined value..

In an embodiment, upon determining the asset level second score, the computing system **101** may be configured to assess dynamic risk of each of the one or more assets **103** based on the asset level first score and the asset level second score. In an embodiment, the computing system **101** may determine at least one critical asset among the one or more assets **103** and at least one critical failure mode of the at least one critical asset based on the assessment of each of the one or more assets **103.**

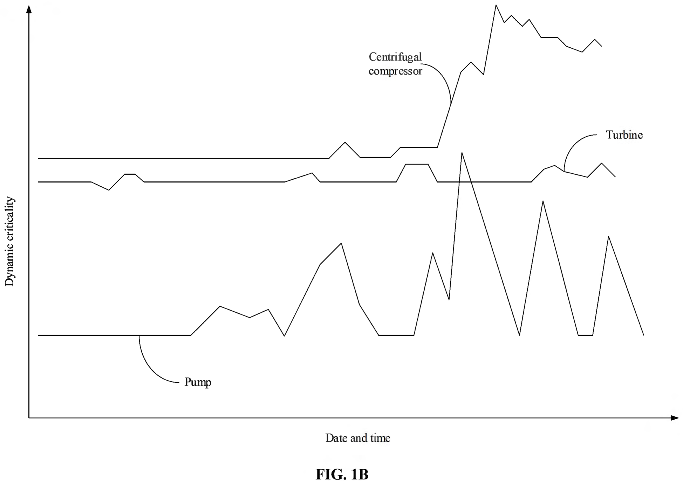

In an embodiment, the computing system **101** may be configured to provide the one or more corrective action recommendations related to the one or more assets based on the assessment. The one or more corrective actions may include, but not limited to, a corrective action, a preventive action, a maintenance action and a decision. As an example, the corrective actions may be an action which may be recommended to correct any fault which has occurred. As an example, the preventive action may be ac action which may be recommended to avoid any fault which may occur. In an embodiment, the computing system **101** may recommend the one or more corrective actions using an Artificial Intelligence (AI) model. In an embodiment, the comparison between the asset level first score and the asset level second score may be provided to an operator associated with the one or more assets **103.** In some embodiments, the comparison may be displayed on a display device associated with the computing system **101.** In some embodiments, the comparison may be provided to the computing system **101** for further processing. As an example, when the asset level first score is 3686 and the asset level second score is 4104, the percentage difference between the asset level first score and the asset level second score is 89%. This may indicate that the asset is critical and one or more corrective actions may be provided to reduce the percentage difference. In some embodiments, the asset level first score and the asset level second score of the one or more assets **103** may be used to compare and prioritize the critical asset. **FIG. 1B** shows an exemplary graph of the asset level second score of multiple assets, i.e., centrifugal compressor, turbine and a pump. As shown in the graph, the centrifugal compressor and turbine have same asset level first score. However, centrifugal compressor is facing frequent failures. These are correctly identified using asset level second score. Also, the turbine is having a much higher asset level first score than the pump. Due to frequent failures in pump, it is more critical in some cases than turbine. The computing system **101** may determine that the centrifugal compressor is the critical asset among the other assets and the centrifugal compressor may require immediate attention as the criticality has increased. The operator may strategically plan and prioritize the critical asset and the critical failure mode in the critical asset to reduce the asset level second score. In some embodiments, computing system **101** may be configured to strategically plan and prioritize the critical asset and the critical failure mode in the critical asset to reduce the asset level second score. In an embodiment, the critical failure mode is a failure mode having highest increment in the asset level amplified risk score when compared with the risk score received from the at least one input source. For instance, referring to Table, D, failure mode "FM3" may be identified as the critical failure mode.

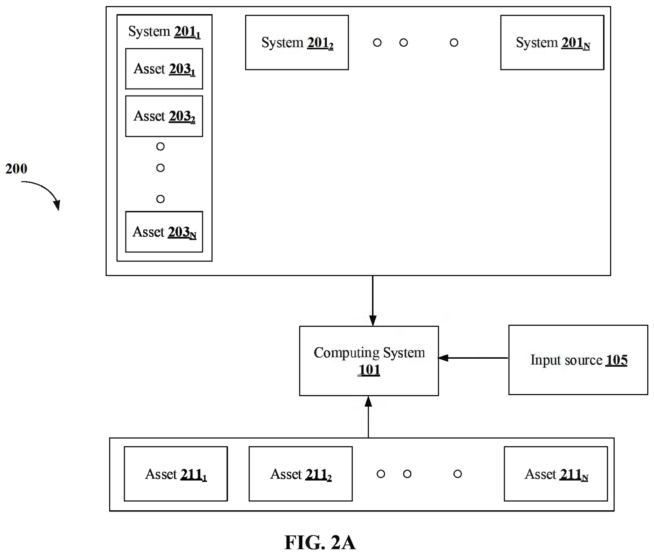

**FIG. 2A** shows an exemplary architecture for assessing dynamic risk for strategic planning of a system associated with one or more assets, in accordance with some embodiments of the present disclosure.

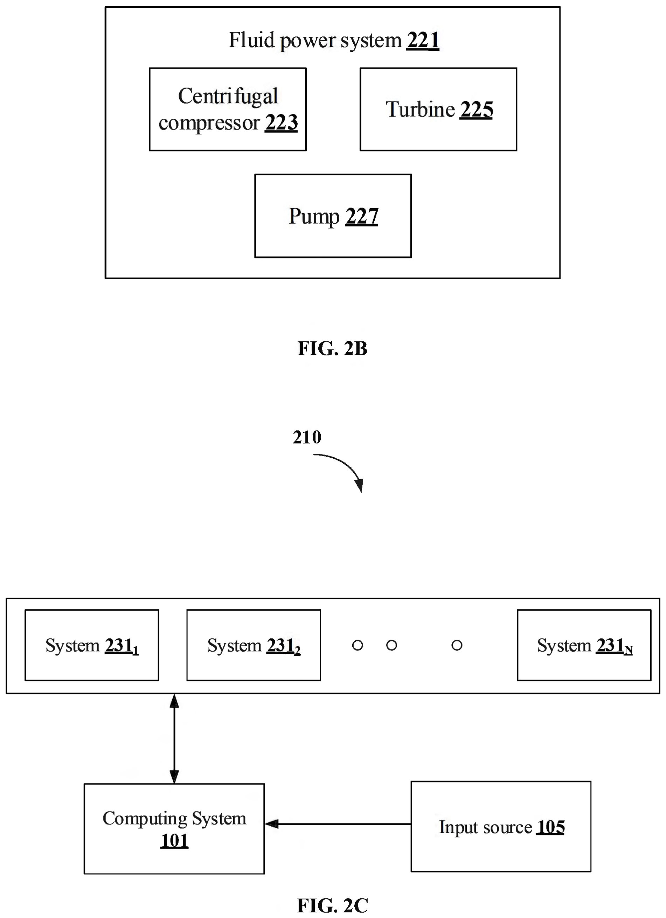

Exemplary environment **200** comprises a computing system **101,** asset **211$_1$** to asset **211$_N$** (also referred as one or more assets **211** or assets **211**) and system **201$_1$** to system **201$_N$** (also referred as one or more systems **201** or systems **201**). As an example, the exemplary environment **200** may be an industrial plant environment which may include the one or more systems **201** and the one or more assets **211.** In an embodiment, each of the one or more systems **201** may include one or more assets which may be different from the one or more assets **211** independent from the one or more systems **201.** For instance, the system **201$_1$** may include one or more assets **203$_1$-203$_N$.** Similarly, the one or more systems **201** may include one or more assets (not shown in figure). **FIG. 2B** shows an exemplary fluid power system **221** which may include three assets, namely, a centrifugal compressor **223,** a turbine **225** and a pump **227.** In some embodiments, the exemplary environment **200** may include only one or more systems **201** which may include one or more assets, as shown in **FIG. 2C.** In an embodiment, the computing system **101** may be associated with the one or more systems **201** and the one or more assets **211** using a communication network (not shown in figure). As an example, the communication network may be a wired communication network, a wireless communication network or a combination of both the wired communication network and the wireless communication network, which enables the connection of the one or more systems **201** and the one or more assets **211** with the computing system **101** for communication. As an example, the computing system **101** may include, without limitation, any device used by a user such as, but not limited to, mobile phones, smartphones, laptops, cloud computing and Personal Computers (PCs). In some embodiments, the computing system **101** may be an existing computing system **101** which was used for performing Failure Mode Effect and Criticality Analysis (FMECA) of the one or more systems **201** using convention technique. In some embodiments, the computing system **101** may be an upgraded version of the existing computing system **101.** As an example, the one or more systems **201** may include, without limitation, any electronic system or any mechanical system used in an industry. As an example, the one or more systems **201** may include, at least one of, a wind turbine system, a power station, a manufacturing system and a fluid distribution system. In an embodiment, the one or more systems, one or more assets **211** and the computing system **101** may be associated with an Asset Performance Monitoring (APM) system (not shown in figure) which may be used to track the performance of the one or more systems **201.**

In an embodiment, the computing system **101** may be configured to receive at least one of a risk score of each of one or more failure modes of each of one or more assets associated with each of the one or more systems **201,** a risk score of each of one or more failure modes of each of one or more systems **201,** asset level first score indicating criticality of each of the one or more failure modes of each of the one or more assets, asset level second score indicating dynamic criticality of each of the one or more assets, event data related to the each of the one or more systems **201** and event data related to the each of the one or more assets, from at least one input source **105** associated with the system. In an embodiment, the one or more failure modes of each of the one or more systems **201** may include a specific way in which the system may fail to perform its intended function which may include, without limitation, primary function and secondary function. For example, malfunctioning of the system, performance issue of the system, degradation of the system and the like, which may prevent the system to perform its intended function. As an example, the system may be a hydraulic system. In an embodiment, the one or more failure modes of each of the one or more assets may include a specific way in which the asset may fail to perform its intended function. For example, malfunctioning of the asset, performance issue of the asset, degradation of the asset and the like, which may prevent the asset to perform its intended function. As an example, if the asset is a compressor, the one or more failure modes may include, without limitation, thrust bearing failure, Non-Drive End (NDE) Dry Gas Seal (DGS) failure, Drive End (DE) bearing failure and DE DGS failure. In an embodiment, the one or more failure modes of each of the one or more systems **201** may be different from each of the one or more failure modes of each of the one or more assets. In other words, the one or more failure modes of each of the one or more systems **201** may be specific to the system and not related to any asset in the system. In an embodiment, each of one or more failure modes may be assigned with the risk score which may be determined based on severity of the failure mode, occurrence of the failure mode and detection of the failure mode. In some embodiments, the risk score may be determined using the Equation 1.

In an embodiment, the severity of the failure mode, the occurrence of the failure mode and the detection of the failure mode may be performed periodically by an operator based on the knowledge of the operator and the criticality of the failure mode.

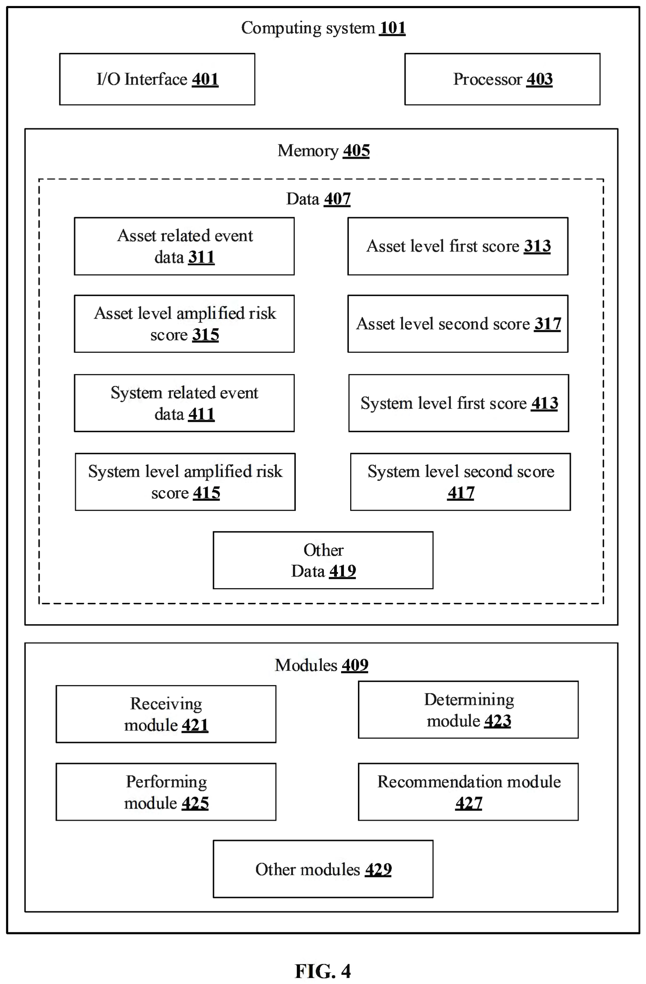

In an embodiment, the event data related to each of the one or more systems **201** may be generated based on at least one of analytics information related to the one or more systems **201** received from analytics data sources, alerts and warnings related to the one or more systems **201** received from control systems, and notifications related to the one or more systems **201** received from Enterprise Resource Planning (ERP) systems. In an embodiment, the event data related to each of the one or more systems **201** may indicate at least one of a plurality of characteristics associated with each of one or more events related to corresponding one or more systems **201**. In an embodiment, the event data may be received from the APM system associated with the computing system **101** and the one or more systems **201**. The event data related to each of the one or more systems **201** is discussed in detail in **FIG. 4** of the present disclosure. The at least one input source **105** associated with each of the one or more systems **201** may include, without limitation, an Asset Performance Monitoring (APM) system for receiving the event data and computing system **101** to receive the risk score of each of the failure modes of each of the one or more systems **201**. The event data related to each of the one or more assets is discussed in detail in **FIG. 1A** and **FIG. 3**.

In an embodiment, upon receiving the risk score and the event data of each of the one or more failure modes of each of the one or more assets and of each of the one or more failure modes of each of the one or more systems **201**, respectively, the computing system **101** may be configured to determine a system level first score indicating aggregated criticality of each of the one or more systems **201** based on at least one of the risk score of each of the one or more failure modes of each of the one or more systems **201**, and one of the risk score of each of the one or more failure modes of each of the one or more assets and the asset level first score.

In some embodiments, the computing system **101** may determine the system level second score based on the risk score of each of the one or more failure modes of each of the one or more systems **201** and one of the risks scores of each of the one or more failure modes of each of the one or more assets. In an embodiment, the computing system **101** may normalize the risk score of each of the one or more failure modes of each of the one or more systems **201** and the risk score of each of one or more failure modes of each of the one or more assets. Normalization is performed to standardize the risk score of each of the one or more failure modes of each of the one or more assets and the risk score of each of the one or more failure modes of each of the one or more systems **201**. In an embodiment, the normalization is performed by dividing maximum risk score with each of the risk scores. As an example, the risk score and the normalized values of the risk score is provided below:

**Table G**

| Failure mode of Asset/System | Risk score | Normalized value |
|---|---|---|
| Asset 1 | 1073 | 0.0 |
| FM1 | 1254 | 0.2 |
| Asset 2 | 1919 | 1.0 |
| Asset 3 | 2300 | 1.5 |

The values provided in the above table "Table G" is intended as an illustrative example and should not be construed as a limitation of the present disclosure.

In an embodiment, upon normalizing the risk score, the computing system **101** may determine a weightage for the normalized risk score of each of the one or more failure modes of each of the one or more systems **201** using a first predefined technique. As an example, the first predefined technique may be a polynomial equation in which the normalized value is used to determine the weightage. In some embodiments, "equation 2" may be the polynomial equation.

Considering the normalized value in Table G, the weightage value determined for each of the one or more failure modes are provided below:

**Table H**

| Failure mode of Asset/System | Normalized value | Weightage |
|---|---|---|
| Asset 1 | 0.0 | 0.00 |
| FM1 | 0.2 | 0.12 |
| Asset 2 | 1.0 | 0.50 |
| Asset 3 | 1.5 | 0.25 |

The values provided in the above table "Table H" is intended as an illustrative example and should not be construed as a limitation of the present disclosure.

In an embodiment, upon determining the weightage, the computing system **101** may determine the system level first score based on the risk score of the one or more failure modes and cumulative weightage score of the each of the one or more failure modes of each of the one or more systems **201.** The cumulative weightage score may be obtained by aggregating weightage of each of the one or more failure modes of each of the one or more systems **201.**

In some embodiments, the computing system **101** may determine the system level first score based on the risk score of each of the one or more failure modes of each of the one or more systems **201** and the asset level first score. In some other embodiments, the computing system **101** may directly receive the asset level first score of each of the one or more assets (**FIG. 1A** describes the steps for determining the asset level first score) which may be directly used by the computing system **101** to determine the system level second score. The computing system **101** may perform similar steps to determine the system level first score as described above.

In an embodiment, upon determining the system level first score, the computing system **101** may be configured to determine a system level amplified risk score of each of the one or more failure modes based on the risk score of each of the one or more failure modes of each of the one or more systems **201** and the event data related to each of the one or more systems **201**. In an embodiment, the computing system **101** may determine at least one weightage value for each of the one or more systems **201** based on the event data and a plurality of characteristics associated with each of one or more events related to the corresponding one or more systems **201.** The plurality of characteristics may include, without limitation, type of event, type of notification, time at which the notification was generated, open events which are not resolved, and number of notifications generated for each event. The type of event may include, without limitation, rule based, condition indicator, and unsupervised event. The type of notification may include, without limitation, an alert and a warning. Further, the computing system **101** may determine an amplification factor for each of the one or more failure modes of each of the one or more systems **201** based on the at least one weightage value using a second predefined technique. The method of determining the at least one weightage value and the amplification factor is discussed in **FIG. 4** of the present disclosure. The second predefined technique may be an equation in which the at least one weightage value is used to determine the amplification factor. In some embodiments, "equation 3" may be used to determine the amplification factor.

Thereafter, the computing system **101** may determine the system level amplified risk score of each of the one or more failure modes of each system in the one or more systems **201** based on the risk score of each of the one or more failure modes of each of the one or more systems **201** and the corresponding amplification factor. The amplification factor may be multiplied with the risk score of each of the one or more failure modes to obtain the system level amplified risk score of each of the one or more failure modes. Considering the risk score values in the Table G, the amplification factor, the amplified risk score for the corresponding one or more failure modes are shown in Table I below:

**Table I**

| Failure mode of Asset/System | Risk score | Amplification factor | Amplified risk score |
|---|---|---|---|
| Asset 1 | 1073 | 1.50 | 1610 |
| FM1 | 1254 | 1.50 | 1881 |
| Asset 2 | 1919 | 1.25 | 2399 |
| Asset 3 | 2300 | 1.00 | 2300 |

The values provided in the above table "Table I" is intended as an illustrative example and should not be construed as a limitation of the present disclosure.

In an embodiment, upon determining the system level amplified risk score, the computing system **101** may be configured to determine a system level second score indicating aggregated dynamic criticality of each of the one or more systems **201** based on at least one of, the system level amplified risk score of each of the one or more failure modes of each of the one or more systems **201,** and one of an asset level amplified risk score of each of the one or more failure modes of each of the one or more assets or the asset level second score.

In an embodiment, the computing system **101** may determine the system level second score based on the system level amplified risk score of each of the one or more failure modes of each of the one or more systems **201** and the one of an asset level amplified risk score of each of the one or more failure modes of each of the one or more assets. The asset level amplified risk score may be determined based on the risk score of each of the one or more failure modes of each of the one or more assets and the event data related to each of the one or more assets (as explained in **FIG.1A** and **FIG. 3**). In an embodiment, the computing system **101** may normalize the system level amplified risk score of each of the one or more failure modes. Normalization is performed to standardize the amplified risk score of each of the one or more failure modes of each of the one or more systems **201**. In an embodiment, the normalization is performed by dividing maximum amplified risk score with each of the amplified risk score. Considering the risk score values from Table I, the normalized values of the risk score is provided below:

**Table J**

| Failure mode | Amplified risk score | Normalized value |
|---|---|---|
| Asset 1 | 1610 | 0.0 |
| FM1 | 1881 | 0.3 |
| Asset 2 | 2399 | 1.0 |
| Asset 3 | 2268 | 0.8 |

The values provided in the above table "Table J" is intended as an illustrative example and should not be construed as a limitation of the present disclosure.

In an embodiment, upon normalizing the amplified risk score, the computing system **101** may determine a weightage for the normalized asset level amplified risk score of each of the one or more failure modes of each of the one or more systems **201** using a first predefined technique. As an example, the first predefined technique may be the polynomial equation in which the normalized value is used to determine the weightage. In some embodiments, "equation 2" may be the polynomial equation.

Considering the normalized value in Table J, the weightage value determined for each of the one or more failure modes of are provided below:

**Table K**

| Failure mode | Normalized value | Weightage |
|---|---|---|
| Asset 1 | 0.0 | 0.00 |
| FM1 | 0.3 | 0.21 |
| Asset 2 | 1.0 | 0.50 |
| Asset 3 | 0.8 | 0.48 |

The values provided in the above table "Table K" is intended as an illustrative example and should not be construed as a limitation of the present disclosure.

In an embodiment, upon determining the weightage, the computing system **101** may determine the system level second score based on the risk score of the one or more failure modes and cumulative weightage score of the each of the one or more failure modes of each of the one or more systems **201**. The cumulative weightage score is obtained by aggregating weightage of the each of the one or more failure modes of each of the one or more systems **201.**

In some embodiments, the computing system **101** may determine the system level second score based on the system level amplified risk score of each of the one or more failure modes of each of the one or more systems **201** and the asset level second score. In an embodiment, the computing system **101** may directly receive the asset level second score of each of the one or more assets (**FIG. 1A** describes the steps for determining the asset level second score) which may be directly used by the computing system **101** to determine the system level second score. The computing system **101** may perform similar steps to determine the system level second score as described above.

In an embodiment, upon determining the asset level second score, the computing system **101** may be configured to assess dynamic risk of each of the one or more systems **201** based on the system level first score and the system level second score. In an embodiment, the computing system **101** may determine at least one critical system among the one or more systems **201,** based on the assessment of each of the one or more systems **201**. In some embodiments, computing system **101** may determine at least one critical asset among the one or more assets, based on the assessment of each of the one or more systems **201**. In some embodiments, computing system **101** may determine at least one critical failure mode of the at least one critical system and the at least one critical asset, based on the assessment of each of the one or more systems **201** and each of the one or more assets **103.**

In an embodiment, the computing system **101** may be configured to provide the one or more corrective action recommendations related to the one or more systems based on the assessment. The one or more corrective actions may comprise at least one of, a corrective action, a preventive action, maintenance action, and a decision. As an example, the corrective actions may be an action which may be recommended to correct any fault which has occurred. As an example, the preventive action may be ac action which may be recommended to avoid any fault which may occur. In an embodiment, the computing system **101** may recommend the one or more corrective actions using an Artificial Intelligence (AI) model. The operator may strategically plan and prioritize at least one of the critical system, critical failure mode in the critical system, critical asset and the critical failure mode in the critical asset to reduce the system level second score and asset level second score. In some embodiments, computing system **101** may be configured to strategically plan and prioritize the at least one critical system among the one or more systems, at least one critical asset among the one or more assets and at least one critical failure mode of the at least one critical system and the at least one critical asset to reduce the system level second score. As an example, referring to Table I, the critical asset may be Asset 2.

FIG. 3 shows a detailed block diagram of a computing system **101** for assessing dynamic risk for strategic planning of one or more assets, in accordance with some embodiments of the present disclosure.

In some implementations, the computing system **101** may include an I/O interface **301,** a processor **303** and a memory **305.** In an embodiment, the memory **305** may be communicatively coupled to the processor **303.** The processor **303** may be configured to perform one or more functions of the computing system **101** for assessing dynamic risk for strategic planning of one or more assets, using the data **307** and the one or more modules **309** of the computing system **101.** In an embodiment, the memory **305** may store data **307.**

In an embodiment, the data **307** stored in the memory **305** may include, without limitation, event data related to assets **311,** asset level first score **313,** asset level amplified risk score **315,** asset level second score **317** and other data **319.** In some implementations, the data **307** may be stored within the memory **305** in the form of various data structures. Additionally, the data **307** may be organized using data models, such as relational or hierarchical data models. The other data **319** may include various temporary data and files generated by the one or more modules **309.**

In an embodiment, the event data related to assets **311** may indicate at least one of a plurality of characteristics associated with each of one or more events related to corresponding one or more assets. In an embodiment, the event data may be generated based on at least one of analytics information related to the one or more assets received from analytics data sources, alerts and warnings related to the one or more assets received from control systems, and notifications related to the one or more assets received from Enterprise Resource Planning (ERP) systems. In an embodiment, the analytics data sources may include one or more types of analytics models. The following are examples of analytics models which may include, without limitation,

- Fault detection - This analytics model detects fault based on past data on near real time basis.
- Anomaly / Changepoint detection - This analytics model detects anomalies in operation on near real time.
- Prediction / forecast - These analytics model predicts behaviour of parameters or demand of some entities in future. These are forecast type analytic
- Condition indicator - These analytics model extracts some features from high frequency data which can be consumed by other analytics on near real time basis.
- Remaining Useful Life (RUL) - RUL analytics predict time remaining till failure. These are forecast type analytics.
- Vibration monitoring - This analytics model detects faults based on signal processing on near real time basis. Reliability - This analytics model detects provides several outputs based on reliability analysis on near real time basis.

The output of above analytics may be alarms, warnings or any numeric output such as no of days remaining till failure, probability of failure and the same. In an embodiment, sensor data may be gathered by the control system. Also, the alarms and the warnings may be configured based on the following conditions:

- Threshold breaching - If parameter crosses predefined thresholds
- Derived parameters - Derived parameters are calculated based on combinations of one or more parameters and can be monitored.

In an embodiment, the notification may be received from the ERP systems, i.e., during maintenance of the one or more assets, work orders may be generated and can be accessed through ERP systems such as Systems, Applications and Products (SAP). These are used based on the following:

- Number of work orders for given asset or system.
- Open work orders for given asset or system.
- Average lead time for each work order.
- ABC indicators

In an embodiment, the plurality of characteristics may include, without limitation, type of event, type of notification, time at which the notification was generated, open events which are not resolved, and number of notifications generated for each event. The type of notification may include, without limitation, an alert and a warning. The type of event may include, without limitation, rule based, condition indicator, unsupervised event, changepoint, Remaining Useful Life (RUL) and timeseries. In an embodiment, each type of event may be indicated using a warning and/or an alert. Further, weights may be assigned to the warning and the alert of each type of event which may be used to determine the asset level amplified risk score. Table L shows exemplary weights for the warning and the alert of each type of event. In an embodiment, the event data related to assets **311** may be used to determine the asset level amplified risk score of each of the one or more failure modes, which is discussed further in the present disclosure.

**Table L**

| Event Type | Alert | Warning |
|------------|-------|---------|
| Event Type 1 | 1 | 0.75 |
| Event Type2 | 0.8 | 0.5 |
| Event Type3 | 0.75 | 0.6 |
| Event Type4 | 0.95 | 0.71 |
| Event Type5 | 1 | 0.82 |
| Event Type6 | 0.9 | 0.4 |

The values provided in the above table "Table L" is intended as an illustrative example and should not be construed as a limitation of the present disclosure.

In an embodiment, the asset level first score **313** may indicate aggregated criticality of each of the one or more assets which may be determined based on the risk score of each of the one or more failure modes of each of the one or more assets. In an embodiment, the asset level first score **313** may be used to determine the asset level amplified risk score **315**. Further the asset level first score **313** may be used to perform the assessment of each of the one or more assets.

In an embodiment, the asset level amplified risk score **315** may indicate an amplified risk score of each of the one or more failure modes of each of the one or more assets which may be determined based on the risk score of each of the one or more failure modes of each of the one or more assets and the event data related to each of the one or more assets. In an embodiment, the asset level amplified risk score **315** may be a dynamic value which is determined based on real-time events and near real-time events.

In an embodiment, the asset level second score **317** may indicate aggregated dynamic criticality of each of the one or more assets based on the asset level amplified risk score of each of the one or more failure modes of each of the one or more assets. In an embodiment, the asset level second score **317** may be used to assess dynamic risk of each of the one or more assets.

In an embodiment, the other data **319** may store data related to the one or more assets and corresponding one or more failure modes. As an example, the data related to the one or more assets may be, without limitation, asset Identification (ID), asset location, asset name and the like.

In an embodiment, the data **307** may be processed by one or more modules **309** of the computing system **101.** In some implementations, the one or more modules **309** may be communicatively coupled to the processor **303** for performing one or more functions of the computing system **101.** In an implementation, the one or more modules **309** may include, without limiting to, a receiving module **321,** a determining module **323,** an assessment module **325,** recommendation module **327** and other modules **329.**

As used herein, the term module may refer to an Application Specific Integrated Circuit (ASIC), an electronic circuit, a hardware processor **303** (shared, dedicated, or group) and memory that execute one or more software or firmware programs, a combinational logic circuit, and/or other suitable components that provide the described functionality. In an implementation, each of the one or more modules **309** may be configured as stand-alone hardware computing units. In an embodiment, the other modules **329** may be used to perform various miscellaneous functionalities on the computing system **101.** It will be appreciated that such one or more modules **309** may be represented as a single module or a combination of different modules.

In an embodiment, the receiving module **321** may be configured for receiving a risk score of each of one or more failure modes of each of one or more assets and event data related to each of the one or more assets from at least one input source **105** associated with each of the one or more assets. The at least one input source **105** associated with each of the one or more assets may include, without limitation, an Asset Performance Monitoring (APM) system for receiving the event data and a computing system **101** to receive the risk score of each of the failure modes of each of the one or more assets. In an embodiment, the risk score of each of the failure modes of each of the one or more assets may be received from an operator associated with the one or more assets. The at least one input source **105** associated with each of the one or more assets may include, without limitation, the APM system for receiving the event data and computing system **101** to receive the risk score of each of the failure modes of each of the one or more assets.

In an embodiment, the determining module **323** may be configured for determining an asset level first score **313** indicating aggregated criticality of each of the one or more assets based on the risk score of each of the one or more failure modes of each of the one or more assets. In an embodiment, the determining module **323** may normalize the risk score of each of the one or more failure modes of each of the one or more assets. Further, the determining module **323** may determine a weightage for the normalized risk score of each of the one or more failure modes of each of the one or more assets using a first predefined technique. Upon determining the weightage, the determining module **323** may determine the asset level first score **313** based on the risk score of the one or more failure modes and cumulative weightage score of the each of the one or more failure modes of each of the one or more assets. The cumulative weightage score is obtained by aggregating weightage of each of the one or more failure modes of each of the one or more assets.

In an embodiment, the determining module **323** may be configured for determining an asset level amplified risk score **315** of each of the one or more failure modes based on the risk score of each of the one or more failure modes of each of the one or more assets and the event data related to each of the one or more assets. In an embodiment, the determining module **323** may determine at least one weightage value for each of the one or more assets based on the event data and a plurality of characteristics associated with each of one or more events related to the corresponding one or more assets. The plurality of characteristics may include, without limitation, type of event, type of notification, time at which the notification was generated, open events which are not resolved, and number of notifications generated for each event. The type of event may include, without limitation, rule based, condition indicator, unsupervised event, changepoint, Remaining Useful Life (RUL) and timeseries. The type of notification may include, without limitation, an alert and a warning. As shown in Table L, exemplary weights for the warning and the alert of each type of event may be assigned.

In an embodiment, the weights may be used to determine the amplification factor along with the plurality of characteristics associated with each of one or more events. In an embodiment, the determining module **323** may determine first weight (w1) based on the type of the event. As an example, as per Table L, the rule-based event is more severe than the KDI. Further, the determining module **323** may determine second weight (w2) based on time of notification. As an example, as per Table L, the alert is more severe than the warning. In an embodiment, persistence of the event may be determined based on number of notifications received for the event. In other words, for event persistence, open events are considered as multiple events. Consider an exemplary scenario in which the event started at 10:00 AM and ended at 11:00 AM. The event is considered as an open event until the event is closed/resolved. The APM system may check the event status periodically until the event is closed. If the frequency of checking event status is 15 minutes, then the event may be considered as 5 times between 10:00 AM and 11:00 AM. In an embodiment, the determining module **323** may determine amplification factor for each event in a predefined duration. As an example, the predefined duration may be 24 Hours. In an embodiment, the determining module **323** may determine the amplification factor for each of the one or more failure modes of each of the one or more assets based on the at least one weightage value using a second predefined technique. The weights w1 and w2 may be used in Equation 3 to determine the amplification factor. In an embodiment, the determining module **323** may determine the asset level amplified risk score **315** of each of the one or more failure modes of each asset in the one or more assets based on the risk score of each of the one or more failure modes of each of the one or more assets and the corresponding amplification factor. As an example, the amplification factor, the amplified risk score for the corresponding one or more failure modes are shown in **Table D.**

In an embodiment, the determining module **323** may be configured for determining an asset level first score **317** indicating aggregated dynamic criticality of each of the one or more assets based on the asset level amplified risk score **315** of each of the one or more failure modes of each of the one or more assets. In an embodiment, the determining module **323** may normalize the asset level amplified risk score **315** of each of the one or more failure modes. Further, the determining module **323** may determine a weightage for the normalized asset level amplified risk score of each of the one or more failure modes using a first predefined technique. Upon determining the weightage, the determining module **323** may determine the asset level first score **317** based on the risk score of the one or more failure modes and a cumulative weightage score of the each of the one or more failure modes. The cumulative weightage score is obtained by aggregating weightage of the each of the one or more failure modes.

In an embodiment, the assessment module **325** may be configured for assessing dynamic risk of each of the one or more assets based on the asset level first score **313** and the asset level first score **317.** In an embodiment, the determining module **323** may determine at least one critical asset among the one or more assets and at least one critical failure mode of the at least one critical asset based on the assessment of each of the one or more assets.

In an embodiment, the recommendation module **327** may be configured for providing one or more corrective action recommendations related to the one or more assets based on the assessment. The one or more corrective actions may comprise at least one of, a corrective action, a preventive action, a maintenance action, and a decision. In an embodiment, the recommendation module **327** may recommend the one or more corrective actions using an Artificial Intelligence (AI) model.

FIG. 4 shows a detailed block diagram of a computing system **101** for assessing dynamic risk for strategic planning of a system associated with one or more assets, in accordance with some embodiments of the present disclosure.

In some implementations, the computing system **101** may include an I/O interface **401,** a processor **403** and a memory **405**. In an embodiment, the memory **405** may be communicatively coupled to the processor **403**. The processor **403** may be configured to perform one or more functions of the computing system **101** for assessing dynamic risk for strategic planning of one or more assets, using the data **407** and the one or more modules **409** of the computing system **101**. In an embodiment, the memory **405** may store data **407**.

In an embodiment, the data **407** stored in the memory **405** may include, without limitation, event data related to assets **311,** asset level first score **313,** asset level amplified risk score **315,** asset level first score **317 317,** event data related to systems **411,** system level first score **413,** system level amplified risk score **415,** system level second score **417** and other data **419.** In some implementations, the data **407** may be stored within the memory **405** in the form of various data structures. Additionally, the data **407** may be organized using data models, such as relational or hierarchical data models. The other data **419** may include various temporary data and files generated by the one or more modules **409.**

In an embodiment, the event data related to assets **311,** the asset level first score **313,** the asset level amplified risk score **315** and the asset level first score **317 317** are discussed in **FIG. 3,** and the same is referred here in its entirety. The data associated with the one or more assets are received and used to evaluate dynamic risk of a system associated with one or more assets for strategic planning. In an embodiment, the system may comprise one or more assets. In some embodiments, the one or more assets may be independent assets which may not be related to the system. However, the one or more assets may be related to same industrial plant of the system.

In an embodiment, the event data related to systems **411** may indicate at least one of a plurality of characteristics associated with each of one or more events related to corresponding one or more systems. In an embodiment, the event data related to systems **411** may be generated based on at least one of analytics information related to the one or more systems received from analytics data sources, alerts and warnings related to the one or more systems received from control systems, and notifications related to the one or more assets received from Enterprise Resource Planning (ERP) systems. In an embodiment, the analytics data sources may include one or more types of analytics models. The following are examples of analytics models which may include, without limitation,

- Fault detection - This analytics model detects fault based on past data on near real time basis.
- Anomaly / Changepoint detection - These analytics model detects anomalies in operation on near real time.
- Prediction / forecast - These analytics model predicts behaviour of parameters or demand of some entities in future. These are forecast type analytic
- Condition indicator - This analytics model extracts some features from high frequency data which can be consumed by other analytics on near real time basis.
- Remaining Useful Life (RUL) - RUL analytics predict time remaining till failure. These are forecast type analytics.
- Vibration monitoring - This analytics model detects faults based on signal processing on near real time basis.
- Reliability - This analytics model detects provides several outputs based on reliability analysis on near real time basis.

The output of above analytics may be alarms, warnings or any numeric output such as no. of days remaining till failure, probability of failure and the same. In an embodiment, sensor data may be gathered by the control system. Also, the alarms and the warnings may be configured based on the following conditions:

- Threshold breaching - If parameter crosses predefined thresholds
- Derived parameters - Derived parameters are calculated based on combinations of one or more parameters and can be monitored.

In an embodiment, the notification may be received from the ERP systems, i.e., during maintenance of the one or more assets, work orders may be generated and can be accessed through ERP systems such as Systems, Applications and Products (SAP). These are used based on the following:

- Number of work orders for given asset or system.
- Open work orders for given asset or system.
- Average lead time for each work order.
- ABC indicators

In an embodiment, the plurality of characteristics may include, without limitation, type of event, type of notification, time at which the notification was generated, open events which are not resolved, and number of notifications generated for each event. The type of event may include, without limitation, rule based, condition indicator, unsupervised event, changepoint, Remaining Useful Life (RUL) and timeseries. In an embodiment, each of the type of event may be indicated using a warning and/or an alert. Further, weights may be assigned to the warning and the alert of each of the type of event which may be used to determine the system level amplified risk score. Table M shows an exemplary weight for the warning and the alert of each of the type of event. The type of notification may include, without limitation, an alert and a warning. In an embodiment, the event data related to systems **411** may be used to determine the system level amplified risk score of each of the one or more failure modes, which is discussed further in the present disclosure.

**Table M**

| Event Type | Alert | Warning |
|---|---|---|
| Event Type 1 | 1 | 0.75 |
| Event Type2 | 0.8 | 0.5 |
| Event Type3 | 0.75 | 0.6 |
| Event Type4 | 0.95 | 0.71 |
| Event Type5 | 1 | 0.82 |
| Event Type6 | 0.9 | 0.4 |

The values provided in the above table "Table M" is intended as an illustrative example and should not be construed as a limitation of the present disclosure.

In an embodiment, the system level first score **413** may indicate indicating aggregated criticality of each of the one or more systems which may be determined based on at least one of the risk score of each of the one or more failure modes of each of the one or more systems, and one of the risk score of each of the one or more failure modes of each of the one or more assets and the asset level first score **313**. In an embodiment, the system level first score **413** may be used to determine the asset level amplified risk score **315**. Further the asset level first score **313** may be used to assess dynamic risk of each of the one or more assets.

In an embodiment, the system level amplified risk score **415** may indicate an amplified risk score of each of the one or more failure modes of each of the one or more systems which may be determined based on the risk score of each of the one or more failure modes of each of the one or more systems and the event data related to each of the one or more systems. In an embodiment, the system level amplified risk score **415** may be a dynamic value which is determined based on real-time events and near real-time events.

In an embodiment, the system level second score **417** may indicate aggregated dynamic criticality of each of the one or more systems based on at least one of, the system level amplified risk score **415** of each of the one or more failure modes of each of the one or more systems, and one of an asset level amplified risk score **315** of each of the one or more failure modes of each of the one or more assets or the asset level first score **317**. The asset level amplified risk score **315** may be determined based on the risk score of each of the one or more failure modes of each of the one or more assets and the event data related to each of the one or more assets. In an embodiment, the system level second score **417** may be used to assess dynamic risk of each of the one or more assets.

In an embodiment, the other data **419** may store data related to the one or more systems and corresponding one or more failure modes. As an example, the data related to the one or more systems may be, without limitation, system Identification (ID), system location, system name, number of assets associated with the system and the like.

In an embodiment, the data **407** may be processed by one or more modules **409** of the computing system **101**. In some implementations, the one or more modules **409** may be communicatively coupled to the processor **403** for performing one or more functions of the computing system **101**. In an implementation, the one or more modules **409** may include, without limiting to, a receiving module **421,** a determining module **423,** an assessment module **425,** recommendation module **427** and other modules **429.**

As used herein, the term module may refer to an Application Specific Integrated Circuit (ASIC), an electronic circuit, a hardware processor **403** (shared, dedicated, or group) and memory that execute one or more software or firmware programs, a combinational logic circuit, and/or other suitable components that provide the described functionality. In an implementation, each of the one or more modules **409** may be configured as stand-alone hardware computing units. In an embodiment, the other modules **429** may be used to perform various miscellaneous functionalities on the computing system **101**. It will be appreciated that such one or more modules **409** may be represented as a single module or a combination of different modules.

In an embodiment, the receiving module **421** may be configured for receiving at least one of a risk score of each of one or more failure modes of each of one or more assets associated with each of the one or more systems, a risk score of each of one or more failure modes of each of one or more systems, asset level first score **313** indicating criticality of each of the one or more failure modes of each of the one or more assets, asset level first score **317** indicating dynamic criticality of each of the one or more assets, event data related to the each of the one or more systems and event data related to the each of the one or more assets, from at least one input source **105** associated with the system.

In an embodiment, the determining module **423** may be configured for determining a system level first score **413** indicating aggregated criticality of each of the one or more systems based on at least one of the risk score of each of the one or more failure modes of each of the one or more systems, and one of the risk score of each of the one or more failure modes of each of the one or more assets and the asset level first score **313**. In an embodiment, the determining module **423** may normalize the risk score of each of the one or more failure modes of each of the one or more systems and the risk score of each of one or more failure modes of each of the one or more assets. Further, the determining module **423** may determine a weightage for the normalized risk score of each of the one or more failure modes of each of the one or more systems and each of one or more failure modes of each of the one or more assets using a first predefined technique. Upon determining the weightage, the determining module **423** may the system level first score **413** based on the risk score of the one or more failure modes and cumulative weightage score of the each of the one or more failure modes of each of the one or more systems and each of one or more failure modes of each of the one or more assets. The cumulative weightage score is obtained by aggregating weightage of the each of the one or more failure modes of each of the one or more systems and each of one or more failure modes of each of the one or more assets.

In an embodiment, the determining module **423** may be configured for determining the system level amplified risk score **415** of each of the one or more failure modes based on the risk score of each of the one or more failure modes of each of the one or more systems and the event data related to each of the one or more systems. In an embodiment, the determining module **423** may determine at least one weightage value for each of the system based on the event data and a plurality of characteristics associated with each of one or more events related to the corresponding system. The plurality of characteristics may include, without limitation, type of event, type of notification, time at which the notification was generated, open events which are not resolved, and number of notifications generated for each event. The type of event may include, without limitation, rule based, condition indicator, unsupervised event, changepoint, Remaining Useful Life (RUL) and timeseries. The type of notification may include, without limitation, an alert and a warning. As shown in Table M, exemplary weights for the warning and the alert of each of the type of event may be assigned.

In an embodiment, the weights may be used to determine the amplification factor along with the plurality of characteristics associated with each of one or more events. In an embodiment, the determining module **423** may determine first weight (w1) based on the type of the event. As an example, as per Table M, the event type 1 is more severe than the event type 2, event type 3, event type 4 and event type 6. Further, the determining module **423** may determine second weight (w2) based on time of notification. In an embodiment, persistence of the event may be determined based on number of notifications received for the event. In other words, for event persistence, open events are considered as multiple events. Consider an exemplary scenario in which the event started at 10:00 AM and ended at 11:00 AM. The event is considered as an open event until the event is closed/resolved. The APM system may check the event status periodically until the event is close. If the frequency of checking event status is 15 minutes, then the event may be considered as 5 times between 10:00 AM and 11:00 AM. In an embodiment, the determining module **423** may determine amplification factor for each event in a predefined duration. As an example, the predefined duration may be 24 Hours. In an embodiment, the determining module **423** may determine the amplification factor for each of the one or more failure modes of each of the one or more systems based on the at least one weightage value using a second predefined technique. The weights w1 and w2 may be used in Equation 3 to determine the amplification factor. In an embodiment, the determining module **423** may determine the system level amplified risk score **415** of each of the one or more failure modes of each of the one or more systems based on the risk score of each of the one or more failure modes of each of the one or more systems and the corresponding amplification factor. As an example, the amplification factor, the amplified risk score for the corresponding one or more failure modes are shown in Table D.

In an embodiment, the determining module **423** may be configured for determining a system level second score **417** indicating aggregated dynamic criticality of each of the one or more systems based on at least one of, the system level amplified risk score **415** of each of the one or more failure modes of each of the one or more systems, and one of an asset level amplified risk score **315** of each of the one or more failure modes of each of the one or more assets or the asset level first score **317.** The asset level amplified risk score **315** may be determined based on the risk score of each of the one or more failure modes of each of the one or more assets and the event data related to each of the one or more assets. In an embodiment, the determining module **423** may normalize the system level amplified risk score **415** of each of the one or more failure modes of each of the one or more systems and the asset level amplified risk score **315** of each of the one or more failure modes of each of the one or more assets. Further, the determining module **423** may determine a weightage for the normalized system level amplified risk score of each of the one or more failure modes of each of the one or more systems and each of the one or more failure modes of each of the one or more assets using a first predefined technique. Upon determining the weightage, the determining module **423** may determine the system level second score **417** based on the risk score of the one or more failure modes and a cumulative weightage score of the each of the one or more failure modes of the one or more systems and each of the one or more failure modes of each of the one or more assets. The cumulative weightage score may be obtained by aggregating weightage of the each of the one or more failure modes of each of the one or more systems and each of the one or more failure modes of each of the one or more assets.

In an embodiment, the assessment module **425** may be configured for assessing dynamic risk of each of the one or more systems based on the system level first score **413** and the system level second score **417.** In an embodiment, the determining module **423** may determine at least one critical system among the one or more systems, at least one critical asset among the one or more assets and at least one critical failure mode of the at least one critical system and the at least one critical asset, based on the assessment of each of the one or more systems.

In an embodiment, the recommendation module **427** may be configured for providing one or more corrective action recommendations related to the one or more systems based on the assessment. The one or more corrective actions may comprise at least one of, a corrective action, a preventive action, a maintenance action and a decision. In an embodiment, the assessment module **425** may recommend the one or more corrective actions using an Artificial Intelligence (AI) model.

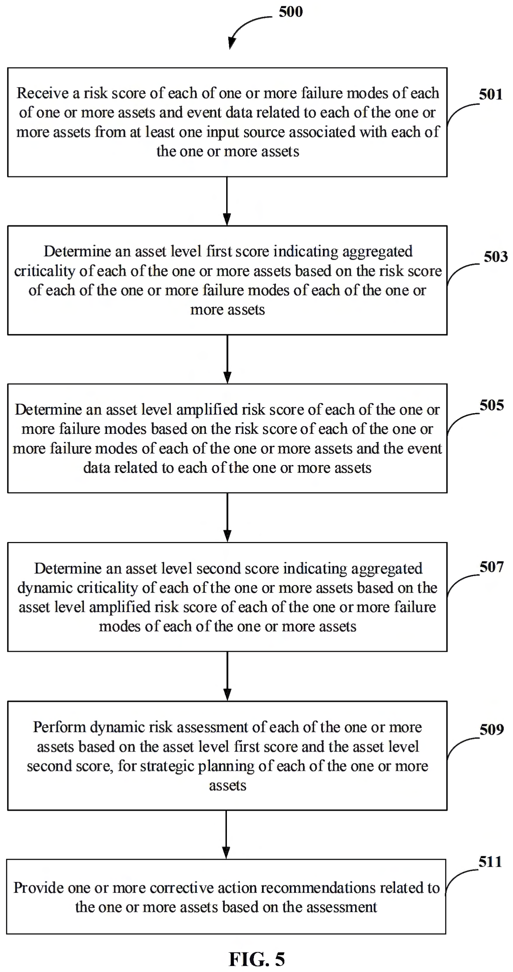

**FIG. 5** shows a flowchart illustrating a method of assessing dynamic risk for strategic planning of one or more assets, in accordance with some embodiments of the present disclosure.

As illustrated in **FIG. 5,** the method **500** may include one or more blocks illustrating a method of assessing dynamic risk for strategic planning of one or more assets using a computing system **101** illustrated in **FIG. 3.** The method **500** may be described in the general context of computer executable instructions. Generally, computer executable instructions can include routines, programs, objects, components, data structures, procedures, modules, and functions, which perform specific functions or implement specific abstract data types.

The order in which the method **500** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block **501,** the method **500** includes receiving, by a processor **303** associated with the computing system **101,** a risk score of each of one or more failure modes of each of one or more assets and event data related to each of the one or more assets from at least one input source **105** associated with each of the one or more assets. The event data is generated based on at least one of analytics information related to the one or more assets received from analytics data sources, alerts and warnings related to the one or more assets received from control systems, and notifications related to the one or more assets received from Enterprise Resource Planning (ERP) systems. The event data indicates at least one of a plurality of characteristics associated with each of one or more events related to corresponding one or more assets.

At block **503,** the method **500** includes determining, by the processor **303,** an asset level first score **313** indicating aggregated criticality of each of the one or more assets based on the risk score of each of the one or more failure modes of each of the one or more assets. In an embodiment, the processor **303** may normalize the risk score of each of the one or more failure modes of each of the one or more assets. Further, the processor **303** may determine a weightage for the normalized risk score of each of the one or more failure modes of each of the one or more assets using a first predefined technique. Thereafter, the processor **303** may determine the asset level first score **313** based on the risk score of the one or more failure modes and cumulative weightage score of the each of the one or more failure modes of each of the one or more assets. The cumulative weightage score is obtained by aggregating weightage of each of the one or more failure modes of each of the one or more assets.

At block **505,** the method **500** includes determining, by the processor **303,** an asset level amplified risk score **315** of each of the one or more failure modes based on the risk score of each of the one or more failure modes of each of the one or more assets and the event data related to each of the one or more assets. In an embodiment, the processor **303** may determine at least one weightage value for each of the one or more assets based on the event data and a plurality of characteristics associated with each of one or more events related to the corresponding one or more assets. Further, the processor **303** may determine an amplification factor for each of the one or more failure modes of each of the one or more assets based on the at least one weightage value using a second predefined technique. Thereafter, the processor **303** may determine the asset level amplified risk score **315** of each of the one or more failure modes of each asset in the one or more assets based on the risk score of each of the one or more failure modes of each of the one or more assets and the corresponding amplification factor.

At block **507,** the method **500** includes determining, by the processor **303,** an asset level first score **317** indicating aggregated dynamic criticality of each of the one or more assets based on the asset level amplified risk score **315** of each of the one or more failure modes of each of the one or more assets. In an embodiment, the processor **303** may normalize the asset level amplified risk score **315** of each of the one or more failure modes. Further, the processor **303** may determine a weightage for the normalized asset level amplified risk score of each of the one or more failure modes using a first predefined technique. Thereafter, the processor **303** may determine the asset level first score **317** based on the risk score of the one or more failure modes and a cumulative weightage score of the each of the one or more failure modes. The cumulative weightage score is obtained by aggregating weightage of the each of the one or more failure modes.

At block **509,** the method **500** includes assessing, by the processor **303,** dynamic risk of each of the one or more assets based on the asset level first score **313** and the asset level first score **317.** In an embodiment, the processor **303** may determine at least one critical asset among the one or more assets and at least one critical failure mode of the at least one critical asset based on the assessment of each of the one or more assets.

At block **511,** the method **500** includes providing, by the processor **303,** one or more corrective action recommendations related to the one or more assets based on the assessment.

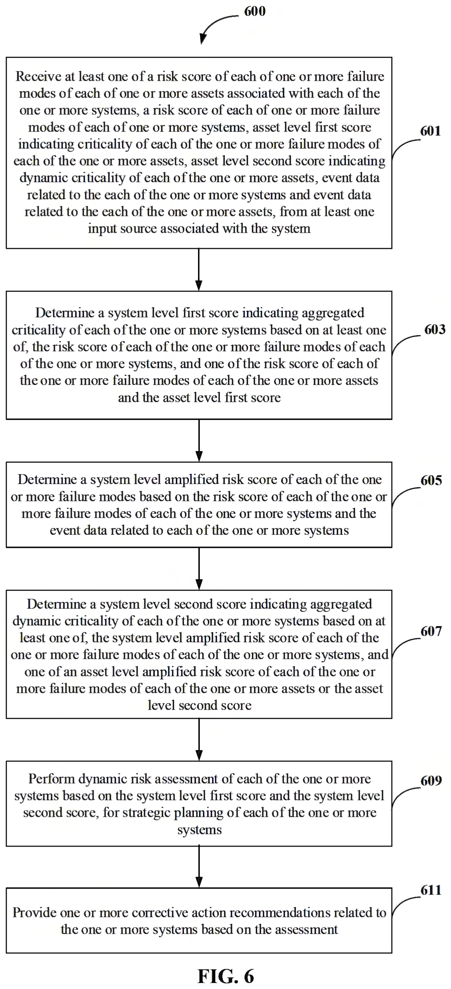

As illustrated in **FIG. 6,** the method **600** may include one or more blocks illustrating a method of assessing dynamic risk for strategic planning of a system associated with one or more assets using a computing system **101** illustrated in **FIG. 4.** The method **600** may be described in the general context of computer executable instructions. Generally, computer executable instructions can include routines, programs, objects, components, data structures, procedures, modules, and functions, which perform specific functions or implement specific abstract data types.

The order in which the method **600** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block **601,** the method **600** includes receiving, by a processor **403** associated with the computing system **101,** at least one of a risk score of each of one or more failure modes of each of one or more assets associated with each of the one or more systems, a risk score of each of one or more failure modes of each of one or more systems, asset level first score **313** indicating criticality of each of the one or more failure modes of each of the one or more assets, asset level first score **317** indicating dynamic criticality of each of the one or more assets, event data related to the each of the one or more systems and event data related to the each of the one or more assets, from at least one input source **105** associated with the system. In an embodiment, to determine the asset level first score **313** and the asset level first score **317,** the processor **403** may determine the asset level first score **313** based on the risk score of each of the one or more failure modes of each of the one or more assets. Further, the processor **403** determine may the asset level amplified risk score **315** of each of the one or more failure modes based on the risk score of each of the one or more failure modes of each of the one or more assets and the event data related to each of the one or more assets. Thereafter, the processor **403** may determine the asset level first score **317** based on the asset level amplified risk score **315** of each of the one or more failure modes of each of the one or more assets. The event data may be generated based on at least one of analytics information related to the system received from analytics data sources, alerts and warnings related to the system received from control systems, and notifications related to the system received from Enterprise Resource Planning (ERP) systems. The event data may indicate at least one of a plurality of characteristics associated with each of one or more events related to corresponding system.

At block **603,** the method **600** includes determining, by the processor **403,** a system level first score **413** indicating aggregated criticality of each of the one or more systems based on at least one of the risk score of each of the one or more failure modes of each of the one or more systems, and one of the risk score of each of the one or more failure modes of each of the one or more assets and the asset level first score **313.** In an embodiment, the processor **403** may normalize the risk score of each of the one or more failure modes of each of the one or more systems and the risk score of each of one or more failure modes of each of the one or more assets. Further, the processor **403** may determine a weightage for the normalized risk score of each of the one or more failure modes of each of the one or more systems and each of one or more failure modes of each of the one or more assets using a first predefined technique. Thereafter, the processor **403** may determine the system level first score **413** based on the risk score of the one or more failure modes and cumulative weightage score of the each of the one or more failure modes of each of the one or more systems and each of one or more failure modes of each of the one or more assets. The cumulative weightage score is obtained by aggregating weightage of the each of the one or more failure modes of each of the one or more systems and each of one or more failure modes of each of the one or more assets.

At block **605,** the method **600** includes determining, by the processor **403,** a system level amplified risk score **415** of each of the one or more failure modes based on the risk score of each of the one or more failure modes of each of the one or more systems and the event data related to each of the one or more systems. In an embodiment, the processor **403** may determine at least one weightage value for each of the system based on the event data and a plurality of characteristics associated with each of one or more events related to the corresponding system. Further, the processor **403** may determine an amplification factor for each of the one or more failure modes of each of the one or more systems based on the at least one weightage value using a second predefined technique. Thereafter, the processor **403** may determine the system level amplified risk score **415** of each of the one or more failure modes of each of the one or more systems based on the risk score of each of the one or more failure modes of each of the one or more systems and the corresponding amplification factor.

At block **607,** the method **600** includes determining, by the processor **403,** a system level second score **417** indicating aggregated dynamic criticality of each of the one or more systems based on at least one of, the system level amplified risk score **415** of each of the one or more failure modes of each of the one or more systems, and one of an asset level amplified risk score **315** of each of the one or more failure modes of each of the one or more assets or the asset level first score **317.** The asset level amplified risk score **315** is determined based on the risk score of each of the one or more failure modes of each of the one or more assets and the event data related to each of the one or more assets. In an embodiment, the processor **403** may the system level amplified risk score **415** of each of the one or more failure modes of each of the one or more systems and the asset level amplified risk score **315** of each of the one or more failure modes of each of the one or more assets. Further, the processor **403** may determine a weightage for the normalized system level amplified risk score of each of the one or more failure modes of each of the one or more systems and each of the one or more failure modes of each of the one or more assets using a first predefined technique. Thereafter, the processor **403** may determine the system level second score **417** based on the risk score of the one or more failure modes and a cumulative weightage score of the each of the one or more failure modes of the one or more systems and each of the one or more failure modes of each of the one or more assets. The cumulative weightage score is obtained by aggregating weightage of the each of the one or more failure modes of each of the one or more systems and each of the one or more failure modes of each of the one or more assets.

At block **609,** the method **600** includes assessing, by the processor **403,** dynamic risk of each of the one or more systems based on the system level first score **413** and the system level second score **417.** In an embodiment, the processor **403** may determine at least one critical system among the one or more systems, at least one critical asset among the one or more assets and at least one critical failure mode of the at least one critical system and the at least one critical asset, based on the assessment of each of the one or more systems.

At block **611,** the method **600** includes providing, by the processor **403,** one or more corrective action recommendations related to the one or more systems based on the assessment.

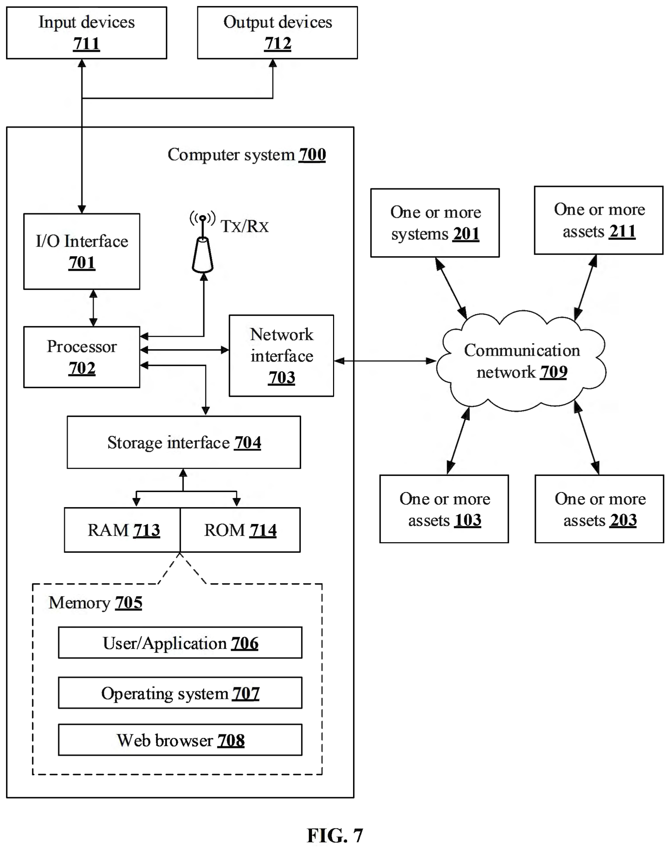

**FIG. 7** illustrates a block diagram of an exemplary computer system **700** for implementing embodiments consistent with the present disclosure. In an embodiment, the computer system **700** may be the computing system **101** illustrated in **FIG. 1A** and **FIG. 2A.** The computer system **700** may include a central processing unit ("CPU" or "processor" or "memory controller") **702.** The processor **702** may comprise at least one data processor for executing program components for executing user- or system-generated business processes. A user may include a network manager, an application developer, a programmer, an organization or any system/sub-system being operated parallelly to the computer system **700.** The processor **702** may include specialized processing units such as integrated system (bus) controllers, memory controllers/memory management control units, floating point units, graphics processing units, digital signal processing units, etc.

The processor **702** may be disposed in communication with one or more Input/Output (I/O) devices (**711** and **712**) via I/O interface **701.** The I/O interface **701** may employ communication protocols/methods such as, without limitation, audio, analog, digital, stereo, IEEE®-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE® 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE) or the like), etc. Using the I/O interface **701,** the computer system **700** may communicate with one or more I/O devices **711** and **712.**

In some embodiments, the processor **702** may be disposed in communication with a network **107** via a network interface **703.** The network interface **703** may communicate with the network **709.** The network interface **703** may employ connection protocols including, without limitation, direct connect, Ethernet (e.g., twisted pair 10/100/1000 Base T), Transmission Control Protocol/Internet Protocol (TCP/IP), token ring, IEEE® 802.11a/b/g/n/x, etc.

In an implementation, the preferred network **709** may be implemented as one of the several types of networks, such as intranet or Local Area Network (LAN) and such within the organization. The preferred network **709** may either be a dedicated network or a shared network, which represents an association of several types of networks that use a variety of protocols, for example, Hypertext Transfer Protocol (HTTP), Transmission Control Protocol/Internet Protocol (TCP/IP), Wireless Application Protocol (WAP) etc., to communicate with each other. Further, the network **709** may include a variety of network devices, including routers, bridges, servers, computing devices, storage devices, etc. Using the network interface **703** and the network **709,** the computer system **700** may communicate with one or more systems **201** and one or more assets (**103, 203, 211**).

In some embodiments, the processor **702** may be disposed in communication with a memory **705** (e.g., RAM **713,** ROM **714,** etc. as shown in **FIG. 7**) via a storage interface **704.** The storage interface **704** may connect to memory **705** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **705** may store a collection of program or database components, including, without limitation, user/application interface **706,** an operating system **707,** a web browser **708,** and the like. In some embodiments, computer system **700** may store user/application data **706,** such as the data, variables, records, etc. as described in this invention. Such databases may be implemented as fault-tolerant, relational, scalable, secure databases such as Oracle® or Sybase® or PostgreSQL®.

The operating system **707** may facilitate resource management and operation of the computer system **700.** Examples of operating systems include, without limitation, APPLE® MACINTOSH® OS X®, UNIX®, UNIX-like system distributions (E.G., BERKELEY SOFTWARE DISTRIBUTION® (BSD), FREEBSD®, NETBSD®, OPENBSD, etc.), LINUX® DISTRIBUTIONS (E.G., RED HAT®, UBUNTU®, KUBUNTU®, etc.), IBM® OS/2®, MICROSOFT® WINDOWS® (XP®, VISTA®/7/8, 10 etc.), APPLE® IOS®, GOOGLE ™ ANDROID ™, BLACKBERRY® OS, or the like.

The user interface **706** may facilitate display, execution, interaction, manipulation, or operation of program components through textual or graphical facilities. For example, the user interface **706** may provide computer interaction interface elements on a display system operatively connected to the computer system **700,** such as cursors, icons, check boxes, menus, scrollers, windows, widgets, and the like. Further, Graphical User Interfaces (GUIs) may be employed, including, without limitation, APPLE® MACINTOSH® operating systems' Aqua®, IBM® OS/2®, MICROSOFT® WINDOWS® (e.g., Aero, Metro, etc.), web interface libraries (e.g., ActiveX®, JAVA®, JAVASCRIPT®, AJAX, HTML, ADOBE® FLASH®, etc.), or the like.

The web browser **708** may be a hypertext viewing application. Secure web browsing may be provided using Secure Hypertext Transport Protocol (HTTPS), Secure Sockets Layer (SSL), Transport Layer Security (TLS), and the like. The web browsers **708** may utilize facilities such as AJAX, DHTML, ADOBE® FLASH®, JAVASCRIPT®, JAVA®, Application Programming Interfaces (APIs), and the like. Further, the computer system **700** may implement a mail server stored program component. The mail server may utilize facilities such as ASP, ACTIVEX®, ANSI® C++/C#, MICROSOFT®, .NET, CGI SCRIPTS, JAVA®, JAVASCRIPT®, PERL®, PHP, PYTHON®, WEBOBJECTS®, etc. The mail server may utilize communication protocols such as Internet Message Access Protocol (IMAP), Messaging Application Programming Interface (MAPI), MICROSOFT® exchange, Post Office Protocol (POP), Simple Mail Transfer Protocol (SMTP), or the like. In some embodiments, the computer system **700** may implement a mail client stored program component. The mail client may be a mail viewing application, such as APPLE® MAIL, MICROSOFT® ENTOURAGE®, MICROSOFT® OUTLOOK®, MOZILLA® THUNDERBIRD®, and the like.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

Advantages of the embodiments of the present disclosure are illustrated herein.

In an embodiment, present disclosure assess dynamic risk of assets and systems based on real-time and/or near-real time event data which helps in accurately performing the risk assessment of the assets and the systems.

In an embodiment, present disclosure helps in preventing unexpected equipment failures by proactively identifying change in the criticality of failure modes and taking preventive maintenance actions as the event data is used to determine the asset level second score.

In an embodiment, present disclosure helps in improving the safety by detecting safety-critical failures in advance and taking necessary precautions. Further, the present disclosure helps in proactively identifying the change in the criticality of the failure mode and taking necessary actions to mitigate the failure modes which helps in reducing resources and additional cost caused by critical failure modes. In other words, the probable wastage resource and costs which may be incurred if the machine is unfocused is reduced as the present disclosure assess dynamic risk. Efficiently using dynamic FMECA and proactively addressing the criticality will address the environmental impacts that may occur if the failures are met by the assets. The present disclosure may help in extending the lifespan of heavy machinery by using dynamic FMECA.

In light of the technical advancements provided by the disclosed method, the claimed steps, as discussed above, are not routine, conventional, or well-known aspects in the art, as the claimed steps provide the aforesaid solutions to the technical problems existing in the conventional technologies. Further, the claimed steps clearly bring an improvement in the functioning of the system itself, as the claimed steps provide a technical solution to a technical problem.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be clear that more than one device/article (whether they cooperate) may be used in place of a single device/article. Similarly, where more than one device/article is described herein (whether they cooperate), it will be clear that a single device/article may be used in place of the more than one device/article, or a different number of devices/articles may be used instead of the shown number of devices or programs. The functionality and/or features of a device may be alternatively embodied by one or more other devices which are not explicitly described as having such functionality/features. Thus, other embodiments of invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

**Referral Numerals:**

| Reference Number | Description |
| --- | --- |
| 100 | Environment |
| 101 | Computing system |
| $103_1$-$103_N$ | One or more assets |
| 105 | Input source |
| $201_1$-$201_N$ | One or more systems |
| $203_1$-$203_N$ | One or more assets of the system |
| $211_1$-$211_N$ | One or more assets independent of the system |
| 221 | Fluid power system |
| 223 | Centrifugal compressor |
| 225 | Turbine |
| 227 | Pump |
| $231_1$-$231_N$ | One or more systems |
| 301 | I/O Interface |
| 303 | Memory |
| 305 | Data |
| 307 | Processor |
| 309 | Modules |
| 311 | Event data related to assets |
| 313 | Asset level first score |
| 315 | Asset level amplified risk score |
| 317 | Asset level second score |
| 319 | Other data |
| 321 | Receiving module of the asset |
| 323 | Determining module of the asset |
| 325 | Assessment module of the asset |
| 329 | Recommendation module of the asset |
| 327 | Other modules of the asset |

(continued)

| Reference Number | Description |
|---|---|
| 401 | I/O Interface |
| 403 | Memory |
| 405 | Data |
| 407 | Processor |
| 409 | Modules |
| 411 | Event data related to systems |
| 413 | System level first score |
| 415 | System level amplified risk score |
| 417 | System level second score |
| 419 | Other data |
| 421 | Receiving module of the system |
| 423 | Determining module of the system |
| 425 | Assessment module of the system |
| 429 | Recommendation module of the system |
| 427 | Other modules of the system |
| 700 | Computer system |
| 701 | I/O Interface of the exemplary computer system |
| 702 | Processor of the exemplary computer system |
| 703 | Network interface |
| 704 | Storage interface |
| 705 | Memory of the exemplary computer system |
| 706 | User/Application |
| 707 | Operating system |
| 708 | Web browser |
| 709 | Communication network |
| 711 | Input devices |
| 712 | Output devices |
| 713 | RAM |
| 714 | ROM |

**Claims**

1. A method of assessing dynamic risk for strategic planning of one or more assets, the method comprising:

receiving, by a processor associated with a computing system, a risk score of each of one or more failure modes of each of one or more assets and event data related to each of the one or more assets from at least one input source associated with each of the one or more assets;
determining, by the processor, an asset level first score indicating aggregated criticality of each of the one or more assets based on the risk score of each of the one or more failure modes of each of the one or more assets;
determining, by the processor, an asset level amplified risk score of each of the one or more failure modes based on the risk score of each of the one or more failure modes of each of the one or more assets and the event data related to each of the one or more assets;

determining, by the processor, an asset level second score indicating aggregated dynamic criticality of each of the one or more assets based on the asset level amplified risk score of each of the one or more failure modes of each of the one or more assets;

assessing, by the processor, a dynamic risk of each of the one or more assets based on the asset level first score and the asset level second score; and

providing, by the processor, one or more corrective action recommendations related to the one or more assets based on the assessment.

2. The method as claimed in claim 1, wherein determining the asset level first score comprises:

normalizing the risk score of each of the one or more failure modes of each of the one or more assets;
determining a weightage for the normalized risk score of each of the one or more failure modes of each of the one or more assets using a first predefined technique; and
determining the asset level first score based on the risk score of the one or more failure modes and cumulative weightage score of the each of the one or more failure modes of each of the one or more assets, wherein the cumulative weightage score is obtained by aggregating weightage of the each of the one or more failure modes of each of the one or more assets.

3. The method as claimed in any of the preceding claims, wherein the event data is generated based on at least one of analytics information related to the one or more assets received from analytics data sources, alerts and warnings related to the one or more assets received from control systems, and notifications related to the one or more assets received from Enterprise Resource Planning (ERP) systems,
wherein the event data indicates at least one of a plurality of characteristics associated with each of one or more events related to corresponding one or more assets.

4. The method as claimed in any of the preceding claims, wherein determining the asset level amplified risk score comprises:

determining at least one weightage value for each of the one or more assets based on the event data and a plurality of characteristics associated with each of one or more events related to the corresponding one or more assets;
determining an amplification factor for each of the one or more failure modes of each of the one or more assets based on the at least one weightage value using a second predefined technique; and
determining the asset level amplified risk score of each of the one or more failure modes of each asset in the one or more assets based on the risk score of each of the one or more failure modes of each of the one or more assets and the corresponding amplification factor.

5. The method as claimed in any of the preceding claims, wherein determining the asset level second score comprises:

normalizing the asset level amplified risk score of each of the one or more failure modes;
determining a weightage for the normalized asset level amplified risk score of each of the one or more failure modes using a first predefined technique; and
determining the asset level second score based on the risk score of the one or more failure modes and a cumulative weightage score of the each of the one or more failure modes, wherein the cumulative weightage score is obtained by aggregating weightage of the each of the one or more failure modes.

6. The method as claimed in any of the preceding claims, wherein assessing the dynamic risk further comprises:
determining, by the processor, at least one critical asset among the one or more assets and at least one critical failure mode of the at least one critical asset based on the assessment of each of the one or more assets.

7. A method of assessing dynamic risk for strategic planning of a system associated with one or more assets, the method comprising:

receiving, by a processor, from at least one input source associated with the system, at least one of:

a risk score of each of one or more failure modes of each of one or more assets associated with each of the one or more systems,
a risk score of each of one or more failure modes of each of one or more systems,

asset level first score indicating criticality of each of the one or more failure modes of each of the one or more assets,
asset level second score indicating dynamic criticality of each of the one or more assets,
event data related to the each of the one or more systems, and
event data related to the each of the one or more assets;

determining, by the processor, a system level first score indicating aggregated criticality of each of the one or more systems based on at least one of:

the risk score of each of the one or more failure modes of each of the one or more systems, and
one of the risk scores of each of the one or more failure modes of each of the one or more assets and the asset level first score;

determining, by the processor, a system level amplified risk score of each of the one or more failure modes based on the risk score of each of the one or more failure modes of each of the one or more systems and the event data related to each of the one or more systems;
determining, by the processor, a system level second score indicating aggregated dynamic criticality of each of the one or more systems based on at least one of:

the system level amplified risk score of each of the one or more failure modes of each of the one or more systems, and
one of an asset level amplified risk score of each of the one or more failure modes of each of the one or more assets or the asset level second score, wherein the asset level amplified risk score is determined based on the risk score of each of the one or more failure modes of each of the one or more assets and the event data related to each of the one or more assets; and

assessing, by the processor, dynamic risk assessment of each of the one or more systems based on the system level first score and the system level second score; and
providing, by the processor, one or more corrective action recommendations related to the one or more systems based on the assessment.

8. The method as claimed in claim 7, wherein determining the system level first score comprises:

normalizing the risk score of each of the one or more failure modes of each of the one or more systems and the risk score of each of one or more failure modes of each of the one or more assets;
determining a weightage for the normalized risk score of each of the one or more failure modes of each of the one or more systems and each of one or more failure modes of each of the one or more assets using a first predefined technique; and
determining the system level first score based on the risk score of the one or more failure modes and cumulative weightage score of the each of the one or more failure modes of each of the one or more systems and each of one or more failure modes of each of the one or more assets, wherein the cumulative weightage score is obtained by aggregating weightage of the each of the one or more failure modes of each of the one or more systems and each of one or more failure modes of each of the one or more assets.

9. The method as claimed in any of claims 7 - 8, wherein the event data is generated based on at least one of analytics information related to the system received from analytics data sources, alerts and warnings related to the system received from control systems, and notifications related to the system received from Enterprise Resource Planning (ERP) systems, wherein the event data indicates at least one of a plurality of characteristics associated with each of one or more events related to corresponding system.

10. The method as claimed in any of claims 7 - 9, wherein determining the system level amplified risk score comprises:

determining at least one weightage value for each of the system based on the event data and a plurality of characteristics associated with each of one or more events related to the corresponding system;
determining an amplification factor for each of the one or more failure modes of each of the one or more systems based on the at least one weightage value using a second predefined technique; and
determining the system level amplified risk score of each of the one or more failure modes of each of the one or more systems based on the risk score of each of the one or more failure modes of each of the one or more systems and the corresponding amplification factor.

11. The method as claimed in any of claims 7 - 10, wherein determining the system level second score comprises:

normalizing the system level amplified risk score of each of the one or more failure modes of each of the one or more systems and the asset level amplified risk score of each of the one or more failure modes of each of the one or more assets;

determining a weightage for the normalized system level amplified risk score of each of the one or more failure modes of each of the one or more systems and each of the one or more failure modes of each of the one or more assets using a first predefined technique; and

determining the system level second score based on the risk score of the one or more failure modes and a cumulative weightage score of the each of the one or more failure modes of the one or more systems and each of the one or more failure modes of each of the one or more assets, wherein the cumulative weightage score is obtained by aggregating weightage of the each of the one or more failure modes of each of the one or more systems and each of the one or more failure modes of each of the one or more assets.

12. The method as claimed in any of claims 7 - 11, wherein the asset level first score and the asset level second score are determined by:

determining the asset level first score based on the risk score of each of the one or more failure modes of each of the one or more assets;

determining the asset level amplified risk score of each of the one or more failure modes based on the risk score of each of the one or more failure modes of each of the one or more assets and the event data related to each of the one or more assets;

determining the asset level second score based on the asset level amplified risk score of each of the one or more failure modes of each of the one or more assets.

13. The method as claimed in any of claims 7 - 12, wherein assessing the dynamic risk further comprises:
determining, by the processor, at least one critical system among the one or more systems, at least one critical asset among the one or more assets and at least one critical failure mode of the at least one critical system and the at least one critical asset, based on the assessment of each of the one or more systems.

14. A computing system for assessing dynamic risk for strategic planning of one or more assets, the computing system comprising:
a processor; and
a memory, communicatively coupled to the processor, wherein the memory stores processor executable instructions, which, on execution, causes the processor to execute the method of any of claims 1 - 6.

15. A computing system of assessing dynamic risk for strategic planning of a system associated with one or more assets, the computing system comprising:

a processor; and
a memory, communicatively coupled to the processor, wherein the memory stores processor executable instructions, which, on execution, causes the processor to execute the method of any of claims 7 - 13

**100**

| Asset $103_1$ | Asset $103_2$ | ○ ○ ○ | Asset $103_N$ |

Computing System **101**

Input source **105**

**FIG. 1A**

EP 4 726 621 A1

**FIG. 1B**

30

**FIG. 2A**

**FIG. 2B**

**210**

**FIG. 2C**

Computing system **101**

I/O Interface **301**

Processor **303**

Memory **305**

Data **307**

Asset related event data **311**

Asset level first score **313**

Asset level amplified risk score **315**

Asset level second score **317**

Other Data **319**

Modules **309**

Receiving module **321**

Determining module **323**

Assessment module **325**

Recommendation module **327**

Other modules **329**

**FIG. 3**

Computing system **101**

I/O Interface **401**

Processor **403**

Memory **405**

Data **407**

Asset related event data **311**

Asset level first score **313**

Asset level amplified risk score **315**

Asset level second score **317**

System related event data **411**

System level first score **413**

System level amplified risk score **415**

System level second score **417**

Other Data **419**

Modules **409**

Receiving module **421**

Determining module **423**

Performing module **425**

Recommendation module **427**

Other modules **429**

**FIG. 4**

500

Receive a risk score of each of one or more failure modes of each of one or more assets and event data related to each of the one or more assets from at least one input source associated with each of the one or more assets — 501

Determine an asset level first score indicating aggregated criticality of each of the one or more assets based on the risk score of each of the one or more failure modes of each of the one or more assets — 503

Determine an asset level amplified risk score of each of the one or more failure modes based on the risk score of each of the one or more failure modes of each of the one or more assets and the event data related to each of the one or more assets — 505

Determine an asset level second score indicating aggregated dynamic criticality of each of the one or more assets based on the asset level amplified risk score of each of the one or more failure modes of each of the one or more assets — 507

Perform dynamic risk assessment of each of the one or more assets based on the asset level first score and the asset level second score, for strategic planning of each of the one or more assets — 509

Provide one or more corrective action recommendations related to the one or more assets based on the assessment — 511

**FIG. 5**

600

Receive at least one of a risk score of each of one or more failure modes of each of one or more assets associated with each of the one or more systems, a risk score of each of one or more failure modes of each of one or more systems, asset level first score indicating criticality of each of the one or more failure modes of each of the one or more assets, asset level second score indicating dynamic criticality of each of the one or more assets, event data related to the each of the one or more systems and event data related to the each of the one or more assets, from at least one input source associated with the system

601

Determine a system level first score indicating aggregated criticality of each of the one or more systems based on at least one of, the risk score of each of the one or more failure modes of each of the one or more systems, and one of the risk score of each of the one or more failure modes of each of the one or more assets and the asset level first score

603

Determine a system level amplified risk score of each of the one or more failure modes based on the risk score of each of the one or more failure modes of each of the one or more systems and the event data related to each of the one or more systems

605

Determine a system level second score indicating aggregated dynamic criticality of each of the one or more systems based on at least one of, the system level amplified risk score of each of the one or more failure modes of each of the one or more systems, and one of an asset level amplified risk score of each of the one or more failure modes of each of the one or more assets or the asset level second score

607

Perform dynamic risk assessment of each of the one or more systems based on the system level first score and the system level second score, for strategic planning of each of the one or more systems

609

Provide one or more corrective action recommendations related to the one or more systems based on the assessment

611

**FIG. 6**

**FIG. 7**

| | Europäisches Patentamt European Patent Office Office européen des brevets | **EUROPEAN SEARCH REPORT** | **Application Number** EP 25 20 7984 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2023 200 181 A1 (HONEYWELL INT INC [US]) 10 August 2023 (2023-08-10) <br> * abstract * <br> * paragraphs [0004], [0031] - [0040], [0043] - [0045], [0063], [0075], [0079] - [0081], [0085] - [0102], [0115], [0126] * <br> ----- | 1-15 | INV. <br> G06Q10/0635 <br> G06Q10/0637 |

**TECHNICAL FIELDS SEARCHED (IPC)**

G06Q

The present search report has been drawn up for all claims

| Place of search | Date of completion of the search | Examiner |
|---|---|---|
| Munich | 18 February 2026 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 7984

This annex lists the patent family members relating to the patent documents cited in  the above-mentioned European search report.
The members are as contained in the European Patent Office EDP file on
The European Patent Office is in no way liable for these particulars which are merely given for the purpose of information.

18-02-2026

| Patent document cited in search report | Publication date | Patent family member(s) | Publication date |
|---|---|---|---|
| AU 2023200181 A1 | 10-08-2023 | AU 2023200181 A1 | 10-08-2023 |
| | | CN 116483028 A | 25-07-2023 |
| | | EP 4216120 A1 | 26-07-2023 |
| | | JP 2023107223 A | 02-08-2023 |
| | | SA 123441105 B1 | 28-05-2025 |
| | | US 2023237404 A1 | 27-07-2023 |

EPO FORM P0459

For more details about this annex : see Official Journal of the European Patent Office, No. 12/82